(19) Europäisches Patentamt
European Patent Office
Office européen des brevets

(11) EP 2 537 873 A1

(12) # EUROPÄISCHE PATENTANMELDUNG

(43) Veröffentlichungstag:
**26.12.2012 Patentblatt 2012/52**

(51) Int Cl.:
***C08G 59/68*** *(2006.01)* ***C07F 1/10*** *(2006.01)*
***C07F 1/08*** *(2006.01)* ***C08L 63/00*** *(2006.01)*

(21) Anmeldenummer: **12185359.2**

(22) Anmeldetag: **18.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.12.2006 DE 102006057142**

(62) Dokumentnummer(n) der früheren Anmeldung(en) nach Art. 76 EPÜ:
**07821523.3 / 2 091 954**

(71) Anmelder:
- **Henkel AG&Co. KGAA**
  **40589 Düsseldorf (DE)**
- **Karlsruher Institut für Technologie**
  **76131 Karlsruhe (DE)**

(72) Erfinder:
- **Döring, Manfred**
  **76744 Wörth (DE)**
- **Arnold, Ulrich**
  **76646 Bruchsal (DE)**
- **Roth, Marcel**
  **40589 Düsseldorf (DE)**
- **Barriau, Emilie**
  **Niguel, CA 92677, Laguna (US)**
- **Schmidt-Freytag, Ulrike**
  **41470 Neuss (DE)**
- **Altstädt, Volker**
  **21073 Hamburg (DE)**
- **Wolff Fabris, Felipe**
  **95447 Bayreuth (DE)**
- **Sandler, Jan**
  **67374 Hanhofen (DE)**

Bemerkungen:
Diese Anmeldung ist am 21-09-2012 als Teilanmeldung zu der unter INID-Code 62 erwähnten Anmeldung eingereicht worden.

(54) **Metallverbindungen als Initiatoren**

(57) Die vorliegende Erfindung betrifft Initiatoren in Form von Koordinationspolymeren der allgemeinen Formel $\{[M(L)_a]X_b\}_n$, wobei diese bevorzugt ($SbF_6^-$) als Gegenion aufweisen und erhältlich sind durch Komplexbildungsreaktion eines entsprechenden Metall-$SbF_6$-Salzes mit einem entsprechenden Liganden (L) mit mindestens einer (C-C)-Doppel- und / oder Dreifachbindung. Weiterhin betrifft die vorliegende Erfindung Zubereitungen sowie Epoxidharzsysteme, die solche Initiatoren enthalten und insbesondere nicht-thermisch und / oder thermisch härtbar sind.

EP 2 537 873 A1

## Beschreibung

Die vorliegende Erfindung betrifft Initiatoren, der allgemeinen Formel $\{[M(L)_{a]}X_b\}_n$, wobei diese bevorzugt ($SbF_6^-$) als Gegenion aufweisen und vorzugsweise erhältlich sind durch Komplexbildungsreaktion eines entsprechenden Metall-$SbF_6$-Salzes mit einem entsprechenden Liganden (L). Weiterhin betrifft die vorliegende Erfindung Zubereitungen sowie Epoxidharzsysteme, die solche Initiatoren enthalten und insbesondere nicht-thermisch und / oder thermisch härtbar sind.

Die Aushärtegeschwindigkeit bei der Herstellung von Werkstoffen und Beschichtungsstoffen wird in vielen Prozessen immer wichtiger.
Bei der Entwicklung von Materialien und Beschichtungsstoffen ist es oftmals wünschenswert, dass das System möglichst schnell polymerisiert, so dass eine hohe Produktionsgeschwindigkeit bzw. kurze Taktzeiten ermöglicht werden.
Bei der Polymerisation kommt den Initiatoren, die die Aushärtungsreaktionen initiieren daher eine besondere Bedeutung zu. So sollen Initiatoren bei Raumtemperatur einsetzbar sein sowie eine schnelle Aushärtung bewirken und dennoch die mechanischen Eigenschaften der Produkte nicht negativ beeinflussen.
Zudem sollten die Initiatoren dabei noch gewisse Anforderungen, wie gute Löslichkeit im Monomer und Lagerstabilität erfüllen. Die Initiatoren sollten auch keine Nebenwirkungen wie Vergilbung des Produktes aufweisen.

Seit einigen Jahren werden insbesondere härtbare Harze durch Strahlungsenergie gehärtet.
Eine Polymerisation (Härtung) kann also nicht nur thermisch sondern auch durch Strahlungsenergie gestartet werden.
Insbesondere bei der UV-Härtung kommt es häufig vor, dass das Harz nur in den Bereichen aushärtet, die einer bestimmten Menge an Strahlungsenergie ausgesetzt sind. Eine vollständige Durchhärtung des Harzes ist abhängig von der Schichtdicke: Die Strahlung wird beim Durchdringen des Harzes abgeschwächt oder die Strahlungsenergie wird zum Beispiel in der Gegenwart einer Substanz, die in der Lage ist, eine Wellenlänge zu absorbieren, die derjenigen der Strahlungsenergie entspricht, weitgehend abgeschwächt oder absorbiert.
Im Ergebnis ist es daher bei einer Härtung schwierig, den tiefer liegenden Teil des Harzes zu erreichen.
Daher ist es wichtig bei einer Härtung durch Strahlung, insbesondere bei Harzsystemen, Initiatoren einzusetzen, die schnell aktiviert werden und insbesondere schnell genügend viele Radikale, Kationen und / oder Anionen für den spontanen Ablauf der Polymerisation erzeugen.
Die Härtung durch Elektronenstrahlen wird daher im Gegensatz zur UV-Härtung oder thermischen Härtung immer mehr bevorzugt, da sie viele Nachteile der UV-Härtung bzw. thermischen Härtung nicht aufweist.

US5726216 beansprucht ein Verfahren zur Herstellung von nicht-thermisch gehärteten Epoxidharzen, in dem Diaryl-iodonium Salze als kationische Initiatoren eingesetzt werden und die Härtung mittels hochenergetischer ionisierender Strahlung bei einer Dosis von größer als 0.75 kilogray/sek vorgenommen wird.

In EP0843685 B1 wird ein Verfahren beansprucht zur Herstellung eines zäh-modifizierten, nicht thermisch härtenden Epoxidharzsystems, das ebenfalls einen kationischen Initiator bestehend aus einem Diaryl-iodoniumsalz enthält und in dem das Härten bei einer Dosisrate von mehr als 1 kilogray/sek durchgeführt wird.

Die Härtung von Epoxidharzen erfolgt im Stand der Technik üblicherweise in Gegenwart von Katalysatoren, die zumeist aus Iodonium- oder Sulfoniumsalzen mit den Anionen $SbF_6$ , $AsF_6^-$, $PF_6^-$ oder $BF_4^-$ bestehen.

Es war daher eine Aufgabe der vorliegenden Erfindung alternative Initiatoren zu den bereits aus dem Stand der Technik bekannten zu finden und bereitzustellen. Insbesondere war es Aufgabe der vorliegenden Erfindung Initiatoren zur Verfügung zu stellen, die auf einfachem Wege herstellbar sind.

Weiterhin war es Aufgabe der vorliegenden Erfindung Initiatoren bereitzustellen, die ein System, bevorzugt ein Harzsystem, nicht-thermisch und / oder thermisch (initiiert) ausreichend aushärten, und das nach der Härtung einen hohen Vernetzungsgrad aufweist. Die Aushärtung mit den erfindungsgemäßen Initiatoren soll dabei insbesondere die thermomechanischen und mechanischen Eigenschaften des gehärteten Produkts nicht negativ beeinflussen.
So bestand eine weitere Aufgabe der vorliegenden Erfindung darin, Zubereitungen sowie Harzsysteme, insbesondere Epoxidharzsysteme, die die erfindungsgemäßen Initiatoren enthalten, bereitzustellen.
Dabei ist eine gute Lagerstabilität der Formulierungen und Zubereitungen, die solche Initiatoren enthalten, ein besonders wichtiger Faktor.

Überraschenderweise zeigte sich, dass Initiatoren der allgemeinen Formel (I)

$$\{[M(L)_a]X_b\}_n \qquad (I),$$

mit M = Metallkation, L = Ligand, X = Gegenion,
a = 1 bis 10, bevorzugt 1 bis 6, besonders bevorzugt 1 bis 4,
b = 1 bis 10, bevorzugt 1 bis 6, besonders bevorzugt 1 bis 3,
n = 1 bis $\infty$,

wobei a, b, und n sowohl ganze Zahlen als auch Zahlenbereiche darstellen können und a zusätzlich auch nicht ganze Zahlen darstellen kann,
die Anforderungen der gestellten Aufgaben erfüllen.

So konnte gezeigt werden, dass die erfindungsgemäßen Initiatoren zu Materialien mit sehr guten Elastizitätsmodulwerten (E-Modulwerte) führen.
Zudem konnte gezeigt werden, dass die erfindungsgemäßen Initiatoren in Harzen eine vergleichbare und teilweise auch verbesserte Vernetzungsdichte im Vergleich zu den Initiatorsystemen aus dem Stand der Technik aufweisen.

Gegenstand der vorliegenden Erfindung sind daher Initiatoren der allgemeinen Formel (I)

$$\{[M(L)_a]X_b\}_n \qquad (I),$$

mit M = Metallkation, L = Ligand, X = Gegenion,
a = 1 bis 10, bevorzugt 1 bis 6, besonders bevorzugt 1 bis 4,
b = 1 bis 10, bevorzugt 1 bis 6, besonders bevorzugt 1 bis 3,
n = 1 bis $\infty$,
wobei a, b, und n sowohl ganze Zahlen als auch Zahlenbereiche darstellen können und a zusätzlich auch nicht ganze Zahlen darstellen kann.

Bevorzugt ist das Gegenion (X) hierbei ausgewählt aus Hexafluoroantimonat ($SbF_6^-$), Hexafluorophosphat ($PF_6^-$), Bortetrafluorid ($BF_4^-$), Hexafluoroaluminat ($AlF_6^{3-}$), Trifluormethansulfonat ($CF_3SO_3^-$), Nitrat ($NO_3^-$), Hexafluoroarsenat ($AsF_6^-$), Tetrakis(pentafluorphenylborat) ($B[C_6F_5]_4^-$) Tetrakis[3.5-bis(trifluormethyl)phenyl]borat ($B[C_6H_3(CF_3)_2]_4^-$), Tetraphenylborat ($B[C_6H_5]_4^-$) , Hexafluorotitanat ($TiF_6^{2-}$), Hexafluorogermanat ($GeF_6^{2-}$), Hexafluorosilicat ($SiF_6^{2-}$), Hexafluoronickelat ($NiF_6^{2-}$) oder Hexafluorozirkonat ($ZrF_6^{2-}$). Insbesondere bevorzugt ist als Gegenion (X) Hexafluoroantimonat ($SbF_6^-$).

Ein weiterer Gegenstand der vorliegenden Erfindung sind Initiatoren, umfassend mindestens ein Metallkation (M), mindestens einen Liganden (L) und mindestens ein Molekül Hexafluoroantimonat ($SbF_6^-$) als Gegenion, erhältlich durch die Komplexbildungsreaktion eines entsprechenden Metall-$SbF_6$-Salzes mit einem entsprechenden Liganden (L).
In einer bevorzugten Ausführungsform wird das entsprechende Metall-$SbF_6$-Salz vor der Komplexbildungsreaktion mit dem entsprechenden Liganden (L) erst noch gebildet.

Vorzugsweise umfasst mindestens ein Reaktionsprodukt der Komplexbildungsreaktion einen Komplex der allgemeinen Formel (II)

$$\{[M(L)_a]\,(SbF_6)_b\}_n \qquad (II),$$

mit M = Metallkation, L = Ligand,
a = 1 bis 10, bevorzugt 1 bis 6, besonders bevorzugt 1 bis 4,
b = 1 bis 10, bevorzugt 1 bis 6, besonders bevorzugt 1 bis 3,
n = 1 bis $\infty$,
wobei a, b, und n sowohl ganze Zahlen als auch Zahlenbereiche darstellen können und a zusätzlich auch nicht ganze Zahlen darstellen kann.

In einer bevorzugten Ausführungsform kann das Metallkation (M) der erfindungsgemäßen Initiatoren (I) und / oder (II) ausgewählt sein aus der Gruppe der Übergangsmetalle der vierten oder fünften Periode oder der zweiten oder dritten Hauptgruppe des Periodensystems. Insbesondere bevorzugt ist das Metallkation (M) ausgewählt aus der Gruppe umfassend Ag, Fe, Mg, Co, Cu, Al oder Ti.

In einer bevorzugten Ausführungsform ist der Ligand (L) eine Verbindung mit mindestens einer (C-C)-Doppel- und / oder Dreifachbindung, bevorzugt ein substituiertes oder unsubstituiertes, verzweigtes oder nicht verzeigtes, cyclisches oder nicht-cyclisches Alken oder Alkin mit 1 bis 30 C-Atomen.
In einer weiteren bevorzugten Ausführungsform ist der Ligand (L) ein Ether, insbesondere ein cyclischer Ether, vorzugsweise ein Kronenether.
In einer weiteren bevorzugten Ausführungsform ist der Ligand (L) eine Verbindung aus der Gruppe der Nitrile. Eine solche Verbindung umfasst mindestens eine C=N-Gruppe.

Geeignete bevorzugte Liganden (L) sind beispielsweise ausgewählt aus
Propen, 1-Buten, 1-Penten, 1-Hexen, 1-Octen, 1-Decen, Isopren, Norbornen, Cyclohexen, Cycloocten, Cyclodecen, 1,4-Cyclohexadien, 4-Vinylcyclohexen, trans-2-Octen, Styrol, 5-Norbornen-2-carbonsäure, Butadien, 1,5-Hexadien, 1,6-Heptadien, 1,7-Octadien, 1,9-Decadien, Sorbinsäureethylester, 1,3-Cyclohexadien, 1,3-Cyclooctadien, 1,5-Cyclooctadien, Norbornadien, Dicyclopentadien, Cycloheptatrien, trans,trans,trans-1,5,9-Cyclododecatrien, trans,trans,cis-1,5,9-Cyclododecatrien, Cyclooctatetraen, Squalen, Diallylcarbonat, Diallylether, Diallyldimethylsilan, Nopol, Cyclopentadien, Ethylvinylether, Limonen, 1,2-Dihydronaphthalin, Zimtsäureethylester, Ethylacrylat, Ethylmethacrylat, Stilben, Ölsäuremethylester, Linolsäuremethylester, Linolensäuremethylester, Diphenylacetylen, Dimethylacetylen, 3-Hexin, 1,8-Cyclotetradecadiin, Propargylalkohol, Vinylacetylen, 15-Krone-5, 18-Krone-6, 1-Phenylpropin, 1,8-Nonadün, 18-Krone-6-tetracarbonsäure.

a, b, und n können erfindungsgemäß sowohl ganze Zahlen als auch Zahlenbereiche darstellen und a kann zusätzlich auch nicht ganze Zahlen darstellen.

Insbesondere bevorzugt ist a ein Zahlenbereich von 1 bis 6, besonders bevorzugt von 1 bis 4. Weiterhin bevorzugt ist a = 1, 1.5, 2, 3 oder 4, ganz besonders bevorzugt 1, 1.5 oder 2. Insbesondere bevorzugt ist b ein Zahlenbereich von 1 bis 6, besonders bevorzugt von 1 bis 3. Weiterhin bevorzugt ist b = 1, 2, 3 oder 4, ganz besonders bevorzugt 1, 2 oder 3.

n ist bevorzugt entweder 1 (monomerer Metallkomplex) oder liegt bevorzugt in einem Bereich von 1 bis $\infty$ (monomere, dimere, trimere, oligomere und polymere Koordinationsverbindungen oder Gemische aus diesen), beispielsweise bevorzugt 1 bis 20000, besonders bevorzugt 1 bis 1000, ganz besonders bevorzugt 1 bis 500 oder 1 bis 300. Insbesondere bevorzugt ist für n jedoch ein Zahlenbereich zwischen 1 bis $\infty$ (unendlich).

Da die erfindungsgemäßen Initiatoren im Fall mehrfunktioneller Liganden L (Diene, Triene, Oligoalkene, Diine, Oligoalkine) Koordinationspolymere darstellen können, bedeutet $\infty$ in der vorliegenden Erfindung, dass n ins unendliche gehen kann.

Ist n = 1 bedeutet es erfindungsgemäß, dass monomere Koordinationsverbindungen vorliegen.

Ist n ein Zahlenbereich von 1 bis $\infty$, bedeutet dies, dass neben monomeren auch dimere, trimere, oligomere und polymere Koordinationsverbindungen, sog. Koordinationspolymere, und Gemische aus diesen mit unterschiedlicher Kettenlänge vorliegen.

Daher liegt in einer bevorzugten Ausführungsform eine Mischung aus Initiatoren der allgemeinen Formel (I) vor, besonders bevorzugt liegt eine Mischung aus Initiatoren der allgemeinen Formel (II) vor.

Voraussetzung zur Bildung von dimeren, trimeren, und oligomeren Koordinationsverbindungen sowie Koordinationspolymeren sind mehrfunktionelle Liganden L, welche in der Lage sind mehrere Metallzentren zu verknüpfen und so den Aufbau dimerer, trimerer, oligomerer und polymerer Strukturen ermöglichen. Mit Monoalkenen und -alkinen sowie Kronenethern ist dies nicht möglich und es werden bevorzugt ausschließlich einkernige Koordinationsverbindungen d.h. monomere Komplexe mit nur einem Metallzentrum erhalten (die Parameter a und b sind variabel, n = 1). Im Fall cyclischer Di-, Tri- oder Tetraene (z.B. 1,5-Cyclooctadien, Cycloheptatrien oder Cyclooctatetraen) werden, bevorzugt überwiegend einkernige Metallkomplexe erhalten, die Bildung mehrkerniger ligandverbrückter Strukturen ist jedoch auch möglich. Werden offenkettige Diene als Liganden L eingesetzt so kann, je nach Metallkation und Anion, auch die Bildung von Koordinationspolymeren favorisiert sein. Wird beispielsweise $AgSbF_6$ mit 1,7-Octadien umgesetzt, so wird vorzugsweise $\{[Ag(1,7\text{-Octadien})_{1.5}]SbF_6\}_\infty$, ein Koordinationspolymer mit beispielsweise eindimensionaler Kettenstruktur (a = 1.5, b = 1, n = $\infty$), in dem die Silberzentren bevorzugt abwechselnd durch 1 und 2 Moleküle 1,7-Octadien verbrückt sind, erhalten:

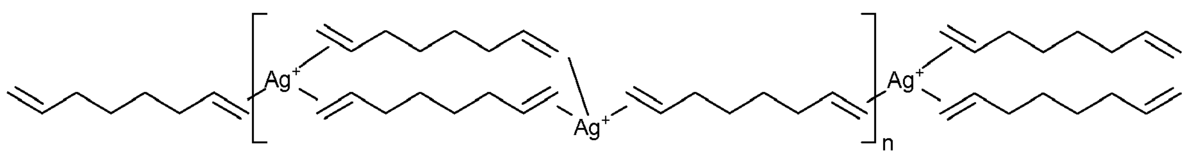

Mit den Liganden 1,5-Hexadien und 1,9-Decadien ergeben sich vorzugsweise ähnliche Strukturen. Mit zunehmender Zahl an Doppelbindungen im Liganden ergeben sich immer mehr Verzweigungsmöglichkeiten, die resultierenden Strukturen werden vorzugsweise komplexer und es werden vorzugsweise Gemische unterschiedlich vernetzter oligomerer und polymerer Koordinationsverbindungen erhalten, wie beispielsweise beim Liganden Squalen, einem offenkettigen Hexaalken. Vorzugsweise werden neben einkernigen Verbindungen auch mehrkernige Verbindungen gebildet.

Erfindungsgemäße Initiatoren sind $[Ag(Cyclohexen)_2]SbF_6$,
$[Ag(Cycloocten)_{1\text{-}4}]SbF_6$, $[Ag(Cyclododecen)_{1\text{-}4}]SbF_6$, $[Ag(trans\text{-}2\text{-}Octen)_{1\text{-}4}]SbF_6$, $[Ag(Styrol)_{1\text{-}4}]SbF_6$, $[Ag(5\text{-}Norbornen\text{-}2\text{-}carbonsäure)_{1\text{-}4}]SbF_6$,
$\{[Ag(1,5\text{-}Hexadien)_{1\text{-}4}]SbF_6\}_{1\text{-}\infty}$, $\{[Ag(1,7\text{-}Octadien)_{1.5}]SbF_6\}_{1\text{-}\infty}$,
$\{[Ag(1,7\text{-}Octadien)_{1.5}]SbF_6\}_{1000}$, $\{[Ag(1,7\text{-}Octadien)_{1.5}]SbF_6\}_{500}$,
$\{[Ag(1,9\text{-}Decadien)_{1\text{-}4}]SbF_6\}_{1\text{-}\infty}$, $\{[Ag(Sorbinsäureethylester)_{1\text{-}4}]SbF_6\}_{1\text{-}\infty}$,
$\{[Ag(1,3\text{-}Cyclohexadien)_{1\text{-}4}]SbF_6\}_{1\text{-}\infty}$, $\{[Ag(1,3\text{-}Cyclooctadien)_{1\text{-}4}]SbF_6\}_{1\text{-}\infty}$,
$[Ag(1,5\text{-}Cyclooctadien)_2]SbF_6$, $\{[Ag(Norbornadien)_{1\text{-}4}]SbF_6\}_{1\text{-}\infty}$, $\{[Ag(Dicyclopentadien)_{1\text{-}4}]SbF_6\}_{1\text{-}\infty}$, $\{[Ag(Cycloheptatrien)_{1\text{-}4}]SbF_6\}_{1\text{-}\infty}$,
$\{[Cu(1,7\text{-}Octadien)_{1\text{-}4}]SbF_6\}_{1\text{-}\infty}$, $[Cu(1,5\text{-}Cyclooctadien)_2]SbF_6$,
$[Cu(15\text{-}Krone\text{-}5)]SbF_6$, $[Fe(15\text{-}Krone\text{-}5)](SbF_6)_3$, $[Fe(18\text{-}Krone\text{-}6)](SbF_6)_3$, $[Mg(15\text{-}Krone\text{-}5)](SbF_6)_2$, $[Co(15\text{-}Krone\text{-}5)](SbF_6)_2$, $[Ag(1R\text{-}(\text{-})\text{-}Nopol)_{1\text{-}4}]SbF_6$, $[Ag(Allylglycidylether)_{1\text{-}4}]SbF_6$, $\{[Ag(trans,trans,cis\text{-}1,5,9\text{-}Cyclododecatrien)_{1\text{-}4}]SbF_6\}_{1\text{-}\infty}$,
$\{[Ag(trans,trans,trans\text{-}1,5,9\text{-}Cyclododecatrien)_{1\text{-}4}]SbF_6\}_{1\text{-}\infty}$, $\{[Ag(Cyclooctatetraen)_{1\text{-}4}]SbF_6\}_{1\text{-}\infty}$, $\{[Ag(Squalen)_{1\text{-}4}]SbF_6\}_{1\text{-}\infty}$.

Die erfindungsgemäßen Initiatoren initiieren vorzugsweise die Polymerisation durch Bildung von Kationen. In einer bevorzugten Ausführungsform sind die erfindungsgemäßen Initiatoren auch Photoinitiatoren.

Ein weiterer Gegenstand der vorliegenden Erfindung sind Zubereitungen, die mindestens einen erfindungsgemäßen Initiator enthalten.

Der Begriff "Zubereitung" steht im Rahmen der vorliegenden Erfindung für Gemische, enthaltend mindestens einen erfindungsgemäßen Initiator und mindestens einen weiteren Zusatzstoff, wie er entweder aufgrund der Art der Herstellung der erfindungsgemäßen Initiatoren vorliegt (beispielsweise Lösemittel, Katalysatoren) oder nachträglich zugemischt wird (beispielsweise Weichmacher, Reaktivverdünner, Füllstoffe und dergleichen).

Demgemäß weist die erfindungsgemäße Zubereitung vorzugsweise ein oder mehrere zusätzliche Bestandteile (Zusatzstoffe) auf, die ausgewählt sind aus der Gruppe der Füllstoffe, Stabilisatoren, Härterbeschleuniger, Antioxidantien, Haftvermittler, Rheologische Agenzien, Verdicker, Bindemittel, Lösungsmittel, Radikalfänger, Katalysatoren, Reaktivverdünner, Weichmacher, additive Harze, Flammschutz-Additive, Schlagzäh-Additive, wie beispielsweise Elastomere, Thermoplaste, Core-Shell Partikel, Nanopartikel, Block-Copolymere, Nanoröhrchen.

In Abhängigkeit des beabsichtigten Endverbrauchs können weitere übliche Zusatzstoffe wie Dispergiermittel, Anti-Kratzmittel, Pigmente, Farbstoffe, Emulgatoren (Tenside), Korrosionsinhibitoren in die erfindungsgemäßen Zubereitungen zugegeben werden.

Vorzugsweise beträgt die Konzentration der erfindungsgemäßen Initiatoren in den Zubereitungen 0.01 bis 10 Gew%, bevorzugt 0.5 bis 3 Gew%, und besonders bevorzugt 1 bis 2 Gew% bezogen auf die Gesamtzusammensetzung.

Als Weichmacher geeignet sind beispielsweise vorzugsweise Ester wie Abietinsäureester, Adipinsäureester, Azelainsäureester, Benzoesäureester, Buttersäureester, Essigsäureester, Phosphorsäureester, Phthalsäureester; Ester höherer Fettsäuren mit etwa 8 bis etwa 44 C-Atomen, wie Dioctyladipat, Diisodecylsuccinat, Dibutylsebacat oder Butyloleat, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, wie beispielsweise Dioctylphthalat, Dibutylphthalat oder Butylbenzylphthalat, Propionsäure-ester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Henkel, Düsseldorf).

Ebenfalls als Weichmacher geeignet sind bevorzugt die reinen oder gemischten Ether monofunktioneller, linearer oder verzweigter C4-16-Alkohole oder Gemische aus zwei oder mehr verschiedenen Ethern solcher Alkohole, beispielsweise Dioctylether (erhältlich als Cetiol OE, Fa. Henkel, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C1-4-alkylether, insbesondere die Dimethyl- oder Diethylether von Diethylenglykol oder Dipropylenglykol, sowie Gemische aus zweien oder mehreren dieser.

Die erfindungsgemäße Zubereitung kann bis zu etwa 80 Gew% an Füllstoffen enthalten. Als Füllstoffe geeignet sind anorganische Füllstoffe, beispielsweise natürlich vorkommende oder synthetische Materialien wie z.B. Quarz, Nitride (z.B. Siliciumnitrid), z.B. von Ce, Sb, Sn, Zr, Sr, Ba und Al abgeleitete Gläser, kolloidales Siliciumdioxid, Feldspat, Borsilikatgläser, Kaolin, Talk, Titandioxid und Zinkgläser, sowie Siliciumdioxidteilchen von Submikrongröße (z.B. pyrogene Siliciumdioxide wie z.B. die Siliciumdioxide der Serien "Aerosil" "OX 50", "130", "150" und "200", welche von Degussa verkauft werden, sowie "Cab-O-Sil M5", welches von Cabot Corp. verkauft wird), Aluminiumsilikate, Magnesiumsilikate, Zeolithe, Bentonite, gemahlene Mineralstoffe, Calciumcarbonate, Quarzstaub, Kieselsäureanhydrid, Siliciumhydrat oder Ruß, Magnesiumcarbonat, gebrannter Ton, Ton, Eisenoxid, Zinkoxid, Titanium Dioxid, Zellstoff, Holzmehl, Glimmer, Spreu, Graphit, feines Aluminiumpulver oder Feuersteinpulver, Glaskugeln, Glasmehl, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln, sowie funktionelle Füllstoffe, die die rheologischen Eigenschaften positiv beeinflussen, beispielsweise hochdisperse Kieselsäure, insbesondere mit niedriger BET-Oberfläche von 20-150, bevorzugt 30-100, insbesondere bevorzugt etwa 50 $m^2/g$ . Gegebenenfalls können Füllstoffe eingesetzt werden, die der Zubereitung Thixotropie verleihen, beispielsweise quellbare Kunststoffe wie PVC.

Geeignete additive Harze sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5-, C-9-, (C-5)2-Harze), gemischte C-5/C-9-Harze, hydrierte und teilhydrierte Derivate der genannten Typen, Harze aus Styrol oder $\alpha$-Methylstyrol sowie Terpen-Phenolharze und weitere wie aufgeführt in Ullmanns Enzyklopädie der technischen Chemie (4. Aufl.), Band 12, S. 525 - 555, Weinheim.

Geeignete Lösungsmittel sind Wasser, Ketone, niedere Alkohole, niedere Carbonsäuren, Ether und Ester wie (Meth)acrylsaeure(ester), Aceton, Acetylaceton, Acetoessigester, Methylethylketon, Methylisobutylketon, Cyclopentanon, Cyclohexanon, N-Methylpyrrolidon, Dioxan, Tetrahydrofuran, 2-Methoxyethanol, 2-Ethoxyethanol, 1-Methoxy-2-propanol, 1,2-Dimethoxyethan, Ethylacetat, n-Butylacetat, Ethyl-3-ethoxypropionat, Methanol, Ethanol, iso-Propanol,

n-Propanol, n-Butanol, isoButanol, sek-Butanol, tert-Butanol, Diacetonalkohol, 2-Ethylhexylalkohol, Ethylenglycol, Diethylenglycol, Ethylenglycoldimethylether, Ethylenglycoldiethylether, Ethylenglycoldi-n-butylether, Diethylenglycol, Diethylenglycoldimethylether, Diethylenglycoldiethylether, Diethylenglycoldi-n-butylether, Polyethylenglykole, Ameisensäure, Essigsäure oder Propionsäure, THF, Dioxan, Acetonitril, Propionitril, Dimethylformamid, Dimethylsulfoxid, Sulfolan, Dimethylcarbonat, Diethylcarbonat, Di-n-butylcarbonat, 1,2-Ethylencarbonat, 1,2-Propylencarbonat oder 1,3-Propylencarbonat sowie aromatische Kohlenwasserstoffe, wie Toluol und Xylol.

Die als Haftvermittler und/oder Reaktivverdünner bevorzugten α-Silane sind vorteilhaft aus der Gruppe bestehend aus -, α-Methacryl-, α-Carbamatosilanen und α-Alkoxysilanen auswählbar.

Geeignete Beispiele sind (Methacryloxymethyl)methyldiethoxysilan und Methacryloxymethyltriethoxysilan, N-(Triethoxysilylmethyl)-O-methyl-carbamat und N-(Methyldiethoxysilylmethyl)-O-methyl-carbamat.

Als Verdicker kommen neben radikalisch (co)polymerisierten (Co)Polymerisaten, übliche organische und anorganische Verdicker wie Hydroxymethylcellulose oder Bentonit in Betracht. Als geeignete Katalysatoren zur Förderung der Vernetzung kommen insbesondere Morpholin, N-Methylmorpholin, 1,3-Diazabicyclo[5.4.6]undecene-7 (DBU). Weitere geeignete Katalysatoren sind solche auf Basis von organischen oder anorganischen Schwermetallverbindungen, wie beispielsweise Kobaltnaphthenat, Dibutylzinndilaurat, Zinnmercaptide, Zinndichlorid, Zirkontetraoctoat, Zinnnaphthenat, Zinnstearat, Antimondioctoat, Bleidioctoat, Metall-, insbesondere Eisenacetylacetonat. Insbesondere kommen alle für die Beschleunigung der Silanol-Kondensation bekannten Katalysatoren in Frage. Beispielsweise sind dies Organozinn-Organotitan-, Organozirkon- oder Organoaluminiumverbindungen. Beispiele für derartige Verbindungen sind Dibutylzinndilaurat, Dibutylzinndimaleat, Zinnoctoat,
Isopropyltriisostearoyltitanat, Isopropyltris(dioctylpyrophosphat)titanat,
Bis(dioctylpyrophosphat)oxyacetattitanat, Tetrabutylzirconat, Tetrakis(acetylacetonato)zirkonium, Tetraisobutylzirkonat, Butoxytris(acetylacetonato)zirkonium, Tris(ethylacetoacetato)aluminium. Dibutylzinnalkylester wie Dibutylzinnalkylmaleate oder Dibutylzinnlaurate sind besonders geeignet, insbesondere Dibutylzinnbisethylmaleat, Dibutylzinnbisbutylmaleat, Dibutylzinnbisoctylmaleat, Dibutylzinnbisoleylmaleat, Dibutylzinnbisacetylacetat, Dibutylzinndiacetat, Dibutylzinndioctoat, Dibutylzinnoxid, Dibutylzinnbistriethoxysilikat und deren katalytisch wirksame Derivate. Die genannten Katalysatoren können alleine oder als Gemisch aus zwei oder mehr der genannten Katalysatoren eingesetzt werden.

Die erfindungsgemäßen Zubereitungen können bis zu 5 Gew% solcher Katalysatoren in der Gesamtzusammensetzung enthalten.

Die erfindungsgemäßen Zubereitungen können weiterhin bis zu etwa 7 Gew%, insbesondere etwa 3 bis etwa 5 Gew% Antioxidantien in der Gesamtzusammensetzung enthalten.

Zu den im Rahmen der Erfindung als Zusatzstoffe einsetzbaren Stabilisatoren oder Antioxidantien, zählen gehinderte Phenole hohen Molekulargewichts ($M_w$), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaery-thrittetrakis-3-(3,5-di-tert-butyl-4-hydroxyphenyl)propionat; n-Octa-decyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 2,4-Dimethyl-6-tert-butylphenol, 2,2'-Methylen-bis- (4-methyl-6-tert-butylphenol; 4,4'-Butyliden-bis-(3-methyl-6-tert-butylphenol); 4,4'-Thiobis(3-methyl-6-tert-butylphenol); 2,6-Di-tert-butyl-p-cresol; 6-(4-Hydroxyphenoxy)-2,4-bis(n-octyl-thio)-1,3,5-triazin; Tetrakis[methylen-3-(3,5-di-tert-butyl-4-hydroxyphenyl)propionate] methan; 1,1,3-Tris(2-methyl-4-hydroxy-4-tert-butylphenyl)butan; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl) propionat].

Als Photostabilisatoren sind beispielsweise diejenigen geeignet, die unter dem Namen Thinuvin® (Hersteller: Ciba Geigy) im Handel erhältlich sind.

Geeignete Stabilisatoren, die typische UV-Absorber sind und Lichtstabilisatoren darstellen, können ebenfalls enthalten sein, vorzugsweise ausgewählt aus den Gruppen der Oxanilide, Triazine und Benzotriazole (letztere erhaeltlich als Tinuvin®-Marken der Ciba-Spezialitätenchemie) und Benzophenone oder Kombinationen hiervon. Es kann vorteilhaft sein Lichtstabilisatoren zuzugeben, die UV-Licht nicht absorbieren.

Eine Auswahl geeigneter bevorzugter UV-Absorber und Lichtstabilisatoren, die in den erfindungsgemäßen Zubereitungen enthalten sein können, sind:

2-Hydroxybenzophenone, zum Beispiel die 4-Hydroxy-, 4-Methoxy-, 4-Octyloxy-, 4-Decyloxy-, 4-Dodecyloxy-, 4-Benzyloxy-, 4,2',4'-Trihydroxy- und
2'-Hyd roxy-4,4'-d i methoxy-Derivate;
Ester von substituierten und unsubstituierten Benzoesäuren, wie zum Beispiel 4-Tertbutylphenylsalicylat, Phenylsalicylat, Octylphenylsalicylat, Dibenzoylresorcinol, Bis(4-tert-butylbenzoyl)resorcinol, Benzoylresorcinol, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.

Die erfindungsgemäßen Zubereitungen können bis zu etwa 2 Gew%, vorzugsweise etwa 1 Gew% solcher UV-Stabilisatoren in der Gesamtzusammensetzung enthalten.

Die erfindungsgemäßen Zubereitungen können weiterhin Schlagzäh-Additive (Schlagzähmodifier) enthalten. Geeignete Schlagzäh-Additive sind beispielsweise end-funktionalisierte oder nicht end-funktionalisierte Thermoplaste wie Polysulfone, Polyphenylsulfone, Polyethersulfone (z.B. Radel und Udel von Solvay, oder Ultrason von BASF), Polyetheretherketone, Polyetherketone, Polybutylenterephthalate, Polycarbonate, Polyetherimide, Polyethylen, Nylon, Polyamidimide, Poly(arylether), Polyester, Polyarylate.

Geeignete Elastomere, die ebenfalls als Schlagzähmodifier fungieren sind zum Beispiel EPDM-oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, SBS, SIS oder IR; solche Polymere sind zum Beispiel als SEPS und SEBS bekannt), Copolymere von Styrol, Butadien, und Ethylen, oder Styrol, Butylene, Ethylene, Butadien, Butylkautschuk, Neopren Kautschuk, und Poly(siloxane).

Weiterhin können Polymere mit einem Molekulargewicht von etwa 5000 bis 2 000 000, vorzugsweise 10 000 bis 1 000 000, wie bevorzugt Homo- und Copolymere von Acrylaten und Methacrylaten, Copolymere von Methylmethacrylat/Ethylacrylat/Methacrylsaeure, Poly(alkylmethacrylaten), Poly(alkylacrylaten); Celluloseester und Ether wie Celluloseacetat, Celluloseacetobutyrat, Methylcellulose, Ethylcellulose; Polyvinylbutyral, Polyvinylformal, cyclisierter Kautschuk, Polyether wie Polyethylenoxid, Polypropylenoxid, Polytetrahydrofuran; Polystyren, Polycarbonat, Polyurethan, chlorierte Polyolefine, Polyvinylchlorid, Copolymere von Vinylchlorid/Vinylidenchlorid, Copolymer von Vinylidenchlorid mit Acrynitril, Methylmethacrylat und Vinylacetat, Polyvinylacetat, Copoly(ethylen/vinylacetat), Polymere wie Polycaprolactam und Poly(hexamethylenadipamid), Polyester wie Poly(ethylenglycolterephthalat) und Poly(hexamethylenglycolsuccinat) als Schlagzäh-Additive verwendet werden.

Geeignete Nanopartikel, die ebenfalls als Schlagzähmodifier eingesetzt werden können sind insbesondere solche auf der Basis von Siliciumdioxid (z.B. Nanopox von Nanoresins), Aluminiumoxid, Zirkoniumoxid und Barium Sulfat. Sie weisen vorzugsweise eine Teilchengröße von weniger als 50 nm auf. Beispiele geeigneter Nanopartikel auf der Basis von Siliciumdioxid sind pyrogene Siliciumdioxide, welche unter dem Handelsnamen Aerosil® VP8200, VP721 oder R972 von der Firma Degussa oder den Handelsnamen Cab 0 Sil® TS 610, CT 1110F oder CT 1110G von der Firma CABOT vertrieben werden. "Multiwall" und "Single-Wall" Nanoröhrchen mit einer modifizierten oder nicht modifizierten Oberfläche sind ebenso einsetzbar.

Ebenfalls denkbar sind Nanopartikel, die in Form von Dispersionen vorliegen, beispielsweise die Dispersion, welche unter dem Handelsnamen High Link® OG 103-31 von der Firma Clariant Hoechst vertrieben wird.

Geeignete Core-Shell Partikel, die z.B. einen vernetzten Silica-Kern und eine funktionalisierte Schale haben (z.B. Genioperl von Wacker, Albidur von Nanoresins) oder die z.B. einen Kautschuk-Kern haben (z.B. Zeon, Kaneka) sowie geeignete hoch funktionalisierte Polymere z.B. Polyole, dendritische Polymere (z.B. Boltorn von Perstorp) und Polyester, können ebenfalls verwendet werden.

Die erfindungsgemäßen Zubereitungen können bis zu 90 Gew%, vorzugsweise bis zu 80 Gew%, besonders bevorzugt bis zu 50 Gew% Schlagzäh-Additive in der Gesamtzusammensetzung enthalten.

Weiterhin können die erfindungsgemäßen Zubereitungen thermische Inhibitoren enthalten, die dazu vorgesehen sind, eine vorzeitige Polymerisation zu verhindern.

Geeignete Inhibitoren sind beispielsweise Hydrochinon, Hydrochinonderivative, p-Methoxyphenol, β-Naphthol oder sterisch gehinderte Phenole wie 2,6-Di(tert-butyl)-p-kresol.

Geeignete Dispergiermittel sind wasserlösliche organische Verbindungen mit hohem Molekulargewicht, die polare Gruppen tragen, beispielsweise Polyvinylalkohole, Polyether, Polyvinylpyrrolidon oder Celluloseether.

Geeignete Emulgatoren können nichtionische Emulgatoren sein und in einigen Fällen können ebenso ionische Emulgatoren verwendet werden.

Weiterhin ist es möglich weitere aus dem Stand der Technik bekannte Initiatoren in den erfindungsgemäßen Zubereitungen einzusetzen, um die initiierte Polymerisation durch die erfindungsgemäßen Initiatoren zu unterstützen. So können beispielsweise thermisch aktivierbare Initiatoren zugesetzt werden ausgewählt aus organischen Azoverbindungen, organischen Peroxiden, C-C-spaltenden Initiatoren wie Benzpinakolsilylether, Hydroxyimide wie z.B. N-Hydroxyphthalimid oder N-Hydroxysuccinimid.

Zu den thermisch aktivierbaren Peroxoverbindungen, welche sich als Initiatoren eignen, zählen Vertreter der verschiedenen peroxidischen Verbindungen, wie Disuccinoylperoxid, Kaliumperoxodisulfat, Cyclohexylsulfonylacetylperoxid, Dibenzoylperoxid, Cyclohexanonperoxid, Di-tert-Butylperoxid, Dialkylperoxide, Diacylperoxide, Peroxydicarbonate, Perketale, Peroxycarbonsäuren und deren Ester, Ketonperoxide und/oder Hydroperoxide. Besonders bevorzugt sind Di(3,5,5-trimethylhexanoyl)peroxid, Didecanoylperoxid, Dilauroylperoxid, Dibenzoylperoxid, Di(2-ethylhexyl)peroxydicarbonat, Dicyclohexylperoxydicarbonat, Di(4-tert-butylcyclohexyl)peroxydicarbonat, Dimyristylperoxydicarbonat, Diacetylperoxydicarbonat, Di-tert-butylperoxyoxalat sowie Peroxycarbonsäureester aus den Reaktionsprodukten zwischen Pivalinsaeure, Neodecansäure oder 2-Ethylhexansäure und tert-Butylhydroperoxid, tert-Amylhydroperoxid, Cumylhydroperoxid, 2,5-Dimethyl-2,5-dihydroperoxy-hexan, 1,3-Di(2-hydroxyperoxyisopropyl)benzol.

Es kommt auch ein System aus zwei oder mehr der vorgenannten thermisch aktivierbaren Initiatoren in Frage.

In einer weiteren Ausführungsform können die erfindungsgemäßen Initiatoren in der Zubereitung mit anderen Initiatoren eingesetzt werden. Dies können beispielsweise dem Fachmann bekannte Photoinitiatoren sein.

Geeignete bevorzugte Photoinitiatoren sind beispielsweise Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, tert-Butylanthrachinon, Anthrachinoncarbonsaeureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-isopropylthioxanthon, 2,4-Dichlorthioxanthon, Benzoin, Benzoin-iso-butylether, Chloroxanthenon, Benzoin-tetrahydropyranylether, Benzoinmethylether, Benzoin-ethylether, Benzoin-butylether, Benzoiniso-propylether, 7-H-Benzoinmethylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Trio-tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinon wie 2-Methylanthrachinon, 2-Ethylanthrachinon, 2-tert-Butylanthrachinon, 1-Chloranthrachinon, 2-Amylanthrachinon und 2,3-Butandion, 2,4,6-Trimethylbenzoyldiphenylphosphinoxid (Lucirin® TPO der BASF AG), Ethyl-2,4,6-trimethylbenzoylphenylphosphinat (Lucirin® TPO L der BASF AG), Bis-(2,4,6-trimethylbenzoyl)-phenylphosphinoxid (Irgacure® 819 der Firma Ciba Spezialiätenchemie), Benzophenone, Hydroxyacetophenone, Phenylglyoxylsäure und ihre Derivate oder Gemische dieser Photoinitiatoren.

Als Beschleuniger für die thermische Nachhärtung kann vorzugsweise z.B. Zinnoctoat, Zinkoctoat, Dibutylzinnlaureat oder Diaza[2.2.2]bicyclooctan in den erfindungsgemäßen Zubereitungen verwendet werden.

In einer weiteren bevorzugten Ausführungsform setzt man, neben den erfindungsgemäßen Initiatoren, zusätzlich eine Kombination aus einem thermisch aktivierbaren Initiator und einem photochemischen Initiator in den erfindungsgemäßen Zubereitungen ein. Das hat den Vorteil, dass Initiatoren eingesetzt werden können, die auf ihren Anwendungsbereich hin optimiert sind.

Die erfindungsgemäße Zubereitung ist vorzugsweise ein Harzsystem ausgewählt aus der Gruppe der Epoxidharzsysteme, Benzoxazinsysteme, Polyurethan-Systeme, Acrylatharzsysteme, Epoxyacrylatharzsysteme, Cyanacrylatharzsysteme, Triazinharzsysteme, Polyimidharzsysteme, Esteracrylatharzsysteme oder thermoplastische Harzsysteme. Bevorzugt ist die Zubereitung ein Epoxidharzsystem.

Es kann auch eine Mischung aus den genannten Harzsystemen vorliegen. In diesem Fall liegt vorzugsweise ein Gemisch aus einem Epoxidharzsystem und einem Benzoxazinsystem und / oder Polyurethan-System und / oder Acrylatharzsystem und / oder einem Epoxyacrylatharzsystem vor.

Besonders bevorzugt ist die Kombination von einem Epoxidharzsystem und einem Acrylatharzsystem.

Unter einem "Epoxidharzsystem" wird im Rahmen der vorliegenden Erfindung eine Harz-Zusammensetzung verstanden, die auf der Basis von Epoxidverbindungen oder epoxidhaltigen Verbindungen gebildet wird.

Solche Epoxidverbindungen oder epoxidhaltigen Verbindungen können sowohl oligomere als auch monomere Epoxidverbindungen sowie Epoxide vom polymeren Typ umfassen und können aliphatische, cycloaliphatische, aromatische oder heterocyclische Verbindungen darstellen.

Die Epoxidverbindungen bzw. epoxidhaltigen Verbindungen des Epoxidharzsystems weisen im Allgemeinen durchschnittlich mindestens eine polymerisierbare Epoxidgruppe pro Molekül auf, vorzugsweise mindestens etwa 1.5 polymerisierbare Epoxidgruppen pro Molekül. Die polymeren Epoxide umfassen lineare Polymere mit endständigen Epoxidgruppen (z.B. einen Diglycidylether eines Polyoxyalkylenglycols), Polymere mit Oxiran-einheiten im Molekülgerüst (z.B. Polybutadienpolyepoxid) sowie Polymere mit am Gerüst anhängenden Epoxidgruppen (z.B. ein Glycidylmethacrylat-Polymer oder -Copolymer). Diese Epoxide können reine Verbindungen oder Mischungen sein, welche eine, zwei oder mehrere Epoxidgruppen pro Molekül enthalten. Die "durchschnittliche" Anzahl von Epoxidgruppen pro Molekül wird bestimmt, indem die Gesamtzahl der Epoxidgruppen im epoxidhaltigen Material durch die Gesamtzahl der anwesenden Epoxidmoleküle dividiert wird.

Das Molekulargewicht der Epoxidverbindungen bzw. epoxidhaltigen Verbindungen des Epoxidharzsystems variiert von 100 g/mol bis zu maximal 10000 g/mol für polymere Epoxidharze. Hinsichtlich der Natur ihres Grundgerüstes und ihrer Substituentengruppen sind den Epoxidverbindungen bzw. epoxidhaltigen Verbindungen ebenfalls keine Grenzen gesetzt.

So kann beispielsweise das Grundgerüst jedem beliebigen Typ angehören und die daran befindlichen Substituentengruppen können alle Gruppen darstellen, welche eine Aushärtung im Wesentlichen nicht stören.

Beispielsweise umfassen die Substituentengruppen Halogene, Estergruppen, Ether, Sulfonatgruppen, Siloxangruppen, Nitrogruppen, Phosphatgruppen und dergleichen.

Geeignete Epoxidharzsysteme im Rahmen der vorliegenden Erfindung sind beispielsweise vorzugsweise ausgewählt aus Epoxidharze vom Bisphenol-A-Typ, Epoxidharze vom Bisphenol-S-Typ, Epoxidharze vom Bisphenol-F-Typ, Epoxidharze vom Phenol-Novolak-Typ, Epoxidharze vom Cresol-Novolak-Typ, epoxidierte Produkte zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat ein.
Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-732" und "DER-736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl) adipat, Bis(2,3-epoxy-cyclopentyl)ether, aliphatisches, mit Polypropylenglycol modifiziertes Epoxid, Dipentendioxid, epoxidiertes Polybutadien (z.B. Krasol Produkte von Sartomer), Epoxidfunktionalitaet enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B. "DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite™ 6010, Araldit™ GY-281™, Araldit™ ECN-1273, Araldit™ ECN-1280, Araldit™ MY-720, RD-2 existiert von der Huntsman Int. LLC; DEN™ 432, DEN™ 438, DEN™ 485 von Dow Chemical Co., Epon™ 812, 826, 830, 834, 836, 871, 872,1001, 1031 etc. von Hexion Specialty Chemicals Inc. und HPT™ 1071, HPT™ 1079 ebenfalls von Hexion Specialty Chemicals Inc., als Novolak-Harze weiterhin beispielsweise Epi-Rez™ 5132 von Hexion Specialty Chemicals Inc., ESCN-001 von Sumitomo Chemical, Quatrex 5010 von Dow Chemical Co., RE 305S von Nippon Kayaku, Epiclon™ N673 von DaiNipon Ink Chemistry oder Epicote™ 152 von Hexion Specialty Chemicals Inc..
Weiterhin lassen sich als Reaktivharze auch Melamin-Harze einsetzen, wie z. B. Cymel TM-327 und -323 von Cytec.
Weiterhin lassen sich als Reaktivharze auch Terpenphenolharze, wie z. B. NIREZTM 2019 von Arizona Chemical einsetzen.
Weiterhin lassen sich als Reaktivharze auch Phenolharze, wie z. B. YP 50 von Toto Kasei, PKHC von Dow Chemical Co. und BKR 2620 von Showa Union Gosei Corp. einsetzen.

Weiterhin lassen sich als Reaktivharze auch Polyisocyanate, wie z. B. CoronateTM L von Nippon Polyurethan Ind., DesmodurTM N3300 oder MondurTM 489 von Bayer einsetzen.

Weitere Epoxidharze können vorzugsweise Copolymere von Acrylsäureestern mit Glycidol wie z.B. Glycidylacrylat und Glycidylmethacrylat mit einer oder mehreren copolymerisierbaren Vinylverbindungen sein. Beispiele solcher Copolymeren sind 1:1 Styrol-Glycidylmethacrylat, 1: 1 Methylmethacrylat-Glycidylacrylat und 62.5:24:13.5 Methylmethacrylat-Ethylacrylat-Glycidylmethacrylat enthalten.
Weitere verwendbare Epoxidharze sind wohlbekannt und enthalten Epoxide wie z.B. Epichlorhydrin; Alkylenoxide, z.B. Propylenoxid, Styroloxid; Alkenyloxide, z.B. Butadienoxid; Glycidylester, z.B. Ethylglycidat.
Weitere verwendbare Epoxidharze sind Silicone mit Epoxidfunktionalität, insbesondere Cyclohexylepoxid-Gruppen, insbesondere solche mit einem Silicon-Grundgerüst. Beispiele sind UV 9300, UV 9315, UV 9400 und UV 9425, welche alle von GE Bayer Silicones geliefert werden.

In einer bevorzugten Ausführungsform umfassen die erfindungsgemäßen Zubereitungen eine Mischung aus mehreren der genannten Epoxidharzsystemen.
Beispiele solcher Mischungen können zwei oder mehrere Molekulargewichtsverteilungen von epoxidhaltigen Verbindungen, wie z.B. ein niedriges Molekulargewicht (unter 200), ein mittleres Molekulargewicht (ca. 200 bis 10000) und ein höheres Molekulargewicht (über ca. 10000) umfassen. Alternativ oder zusätzlich kann das Epoxidharz eine Mischung von epoxidhaltigen Materialien unterschiedlicher chemischer Natur (z.B. aliphatisch oder aromatisch) oder Funktionalität (z.B. polar oder unpolar) enthalten.
Unter einem "Polyurethan-Harzsystem" wird im Rahmen der vorliegenden Erfindung eine Harz-Zusammensetzung verstanden, die auf der Basis von Polyurethanen gebildet wird.
Unter einem "Benzoxazinharzsystem" wird im Rahmen der vorliegenden Erfindung eine Harz-Zusammensetzung verstanden, die auf der Basis von Benzoxazinen gebildet wird.
Unter einem "Acrylatharzsystem, Cyanacrylatharzsystem, Triazinharzsystem, Polyimidharzsystem, Esteracrylatharzsystem" wird im Rahmen der vorliegenden Erfindung eine Harz-Zusammensetzung verstanden, die auf der Basis von Acrylaten, Cyanacrylaten, Triazinen, Polyimiden und / oder Esteracrylaten gebildet wird.
Ein weiterer Gegenstand der vorliegenden Erfindung sind Zubereitungen, enthaltend

- 0.5 Gew% bis 80 Gew% Initiator gemäß Formel (I) oder (II),
- 0 Gew% bis 99.5 Gew% additive Harze,
- 0 Gew% bis 50 Gew% Thermoplast,
- 0 Gew% bis 50 Gew% weitere Zusatzstoffe.

Die erfindungsgemäßen Zubereitungen, die mindestens einen erfindungsgemäßen Initiator enthalten, sind thermisch und / oder nicht-thermisch härtbar.
Vorzugsweise ist die erfindungsgemäße Zubereitung ein Epoxidharzsystem, das nicht-thermisch härtbar ist.
Unter "thermisch" ist im Rahmen der vorliegenden Erfindung eine durch externe Wärmezufuhr initiierte Härtung zu verstehen, wobei eine durch gezielt und aktiv zugeführte nicht-thermische Energie herbeigeführte nicht-thermische Initiierung nicht umfasst ist.
Diese Wärmezufuhr kann beispielsweise mittels Umluftofen oder einem mit Infrarotstrahlern als Wärmequelle oder Mikrowellenstrahlern ausgestatteten Ofen durchgeführt werden.
Das Härten unter Verwendung von thermischer Wärme wird vorzugsweise bei 20 bis 350°C, bevorzugt bei 50 bis 250°C für 10 Sekunden bis 24 Stunden, vorzugsweise 30 Minuten bis 12 Stunden, durchgeführt.
Unter "nicht-thermisch" wird in der vorliegenden Erfindung eine durch Strahlung initiierte Härtung verstanden, wobei eine durch gezielt und aktiv zugeführte thermische Energie herbeigeführte thermische Initiierung nicht umfasst ist. Hierbei kann durch die Strahlungs-initiierte Härtung thermische Energie entstehen, die zur vollständigen Härtung (Polymerisation) führen bzw. beitragen kann (so genannte Nachhärtung).
Vorzugsweise erfolgt die Härtung der erfindungsgemäßen Zubereitungen bzw. Harzsysteme bzw. Harzsystem-Mischungen, durch Strahlen mit mindestens einer Wellenlänge von 1 mm, vorzugsweise mindestens 780 nm, bevorzugt mindestens 1 nm, ganz besonders bevorzugt von mindestens 10 pm.
Die erfindungsgemäßen Zubereitungen sind bevorzugt durch Strahlung ausgewählt aus Röntgen-, Gamma-, Elektronen-, UV- und / oder Mikrowellen-Strahlen härtbar.
Dabei gibt es keine speziellen Einschränkungen für die Strahlungsquelle.
Vorzugsweise kann als Quelle für UV-Strahlen eine Quecksilberlampe, eine Halogenlampe, aber auch monochromatische Strahlung in Form von Lasern verwendet werden.
Erfolgt das Härten unter Verwendung von UV-Strahlen, so findet die UV-Vernetzung bevorzugt mittels kurzzeitiger ultravioletter Bestrahlung in einem Wellenlängenbereich von 200 bis 450 nm statt, insbesondere unter Verwendung von Quecksilber-Hochdruck- oder -Mitteldruck-Lampen bei einer Leistung von 80 bis 240 W/cm.
Als Beispiele der Quelle von Elektronenstrahlen kann ein System zur Nutzung von Thermoelektronen, erzeugt durch kommerziell erhältlichen Wolframfaden, ein Kaltkathodenverfahren, welches Elektronenstrahlen mittels Durchleiten eines hohen Spannungsimpulses durch ein Metall erzeugt, und ein sekundäres Elektronenverfahren, das sekundäre Elektronen, die durch die Kollision von ionisierten Gasmolekülen erzeugt werden, und eine Metallelektrode nutzt, eingesetzt werden. Als Quelle von $\alpha$-Strahlen, $\beta$-Strahlen und $\gamma$-Strahlen können spaltbare Substanzen, wie $Co^{60}$, genutzt werden. Für $\gamma$-Strahlen kann eine Vakuumröhre, die die Kollision eines beschleunigten Elektrons mit einer Anode herbeiführt, verwendet werden. Die Strahlung kann entweder einzeln oder in Kombination aus zwei oder mehr Strahlungstypen verwendet werden. Im letzteren Fall können zwei oder mehr Strahlungstypen entweder gleichzeitig oder mit bestimmten Zeitintervallen verwendet werden.
Das Härten unter Verwendung von Strahlung, insbesondere Elektronenstrahlen, wird vorzugsweise bei 20 bis 250°C, bevorzugt bei 80 bis 100°C in einem Zeitraum von 5 Sekunden bis 12 Stunden, bevorzugt 8 Sekunden bis 4 Stunden, ganz besonders bevorzugt 10 Sekunden bis 1 Stunde, durchgeführt.

In einer bevorzugten Ausführungsform ist die eingesetzte Strahlung zur Härtung der erfindungsgemäßen Zubereitungen oder eines der oben genannten Harzsystemen, eine ionisierende Strahlung, bevorzugt Röntgen- und / oder Elektronenstrahlung.

In einer weiteren bevorzugten Ausführungsform erfolgt die Härtung der erfindungsgemäßen Zubereitungen bzw. Harzsysteme durch kationische Polymerisation, wobei die Polymerisation vorzugsweise durch die Einwirkung von Elektronenstrahlen initiiert wird.

Die Härtung bzw. Polymerisation mittels Elektronenstrahlen hat den Vorteil, dass die Strahlen, in Abhängigkeit von der gewählten Bestrahlungsenergie, das zu härtende Material nahezu vollständig durchdringen und so eine homogene und vollständige Härtung besser erreicht werden kann. Zudem wird durch die energiereiche Strahlung in Gegenwart von kationischen Initiatoren eine Vielzahl von Kationen für die Polymerisation freigesetzt.

Ein weiterer Gegenstand der vorliegenden Erfindung betrifft Epoxidharzsysteme, enthaltend mindestens einen erfindungsgemäßen Initiator.

Ein solches Epoxidharzsystem ist vorzugsweise thermisch und / oder nicht-thermisch härtbar, wobei die eingesetzte Strahlung zur Härtung des Epoxidharzsystems vorzugsweise ausgewählt ist aus Röntgenstrahlen, Gammastrahlen, Elektronenstrahlen, UV-Strahlen und / oder Mikrowellenstrahlen.

Vorzugsweise ist eine härtbare Zubereitung, bevorzugt ausgewählt aus einem Epoxidharzsystem, das mindestens einen erfindungsgemäßen Initiator enthält bei 3 eV bis 25 MeV, insbesondere bei 6 eV bis 20 MeV, bevorzugt bei 1 keV bis 15 MeV, ganz besonders bevorzugt bei 1 keV bis 10 MeV, härtbar.

In einer bevorzugten Ausführungsform wird das Epoxidharzsystem mit einer frei wählbaren Bestrahlungseinheit von 1 bis 1000 kGy, vorzugsweise von 1 bis 300 kGy, besonders bevorzugt von 10 bis 200 kGy, gehärtet.

Insbesondere ist das System bei 132 kGy in 4 Schritten à 33 kGy härtbar.

In einer bevorzugten Ausführungsform kann auch eine Kombination aus thermischer und / oder nicht-thermischer Härtung vorgenommen werden.

So kann zuerst ein thermischer Härtungsschritt durchgeführt werden und danach ein nicht-thermischer oder umgekehrt erst ein nicht-thermischer, dann ein thermischer Härtungsschritt vorgenommen werden.

Sollte die thermische und nicht-thermische Härtung unter Ausschluss von Sauerstoff bzw. Luft stattfinden, kann die Härtung auch unter Schutzgas erfolgen.

Als Schutzgas ist prinzipiell jedes Gas geeignet, das sich bezüglich der eingesetzten Chemikalien inert verhält (Inertgas). Dabei kommen vorzugsweise Gase wie $N_2$, $CO_2$ oder Ar in Frage. Bevorzugt sind dabei jedoch preisgünstige Gase wie $CO_2$ und $N_2$. $CO_2$ hat den Vorteil, dass es sich am Boden von Gefäßen sammelt und somit leicht zu handhaben ist. Geeignete Schutzgase sind insbesondere nicht giftig und nicht brennbar.

Ein weiterer Gegenstand der vorliegenden Erfindung betrifft die Verwendung der erfindungsgemäßen Initiatoren in den genannten Zubereitungen oder Epoxidharzsystemen als Klebstoffe, Komposit-Materialien, Dichtungsmassen, Werkstoffe und zur Beschichtung von Oberflächen.

In einer bevorzugten Ausführungsform kann eine solche erfindungsgemäße Zubereitung als Beschichtungsmasse auf eine Oberfläche aufgetragen und anschließend gehärtet werden.

Als Substrate sind insbesondere bevorzugt Holz, Papier, Textil, Leder, Vlies, Kunststoffe (Polycarbonat, Polymethacrylat, Polystyrol, Polyester, Polyolefin, Epoxidharze, Melaminharze, Triacetylcelluloseharze, ABS-Harze, AS-Harze, Norbornenharze usw.), Glas, Keramik, Papier, mineralische Baustoffe, wie Zement-Formsteine und Faserzementplatten, Metalle oder beschichtete Metalle geeignet. Das Substrat kann auch eine Platte, ein Film oder ein dreidimensional geformter Körper sein.

Als ein Verfahren zum Auftragen der Zubereitung (in diesem Fall als Beschichtungsmasse) auf das Substrat können unterschiedliche Applikationsmethoden angewendet werden, wie beispielsweise Spritzen, Flow-Coating, Rakeln, Streichen, Gießen, Tauchen, Tränken, Träufeln, Walzen, Schauerbeschichten oder Tauchbeschichten.

Dabei kann das zu beschichtende Substrat als solches ruhen, wobei die Applikationseinrichtung oder -anlage bewegt wird. Indes kann auch das zu beschichtende Substrat, bewegt werden, wobei die Applikationsanlage relativ zum Substrat ruht oder in geeigneter Weise bewegt wird.

In einer weiteren bevorzugten Ausführungsform werden die erfindungsgemäßen Initiatoren zur Härtung von Werkstoffen, insbesondere Formkörpern, verwendet. Solche Werkstoffe (Formkörper), die unter Verwendung der erfindungsgemäßen Initiatoren hergestellt werden, weisen vorzugsweise eine hohe mechanische Stabilität und Beständigkeit auf.

Ein weiterer Gegenstand der vorliegenden Erfindung ist die Verwendung der erfindungsgemäßen Initiatoren in härtbaren Systemen für eine thermische (initiierte) und / oder nicht- thermische (initiierte) Härtung, wobei eine nicht-thermische (initierte) Härtung bevorzugt ist.

Solche härtbare Systeme sind bevorzugt Harzsysteme, beispielsweise Epoxidharzsysteme, Benzoxazinsysteme, Polyurethan-Systeme, Acrylatharzsysteme, Epoxyacrylatharzsysteme, Cyanacrylatharzsysteme, Triazinharzsysteme, Polyimidharzsysteme, Esteracrylatharzsysteme oder thermoplastische Harzsysteme oder weitere dem Fachmann bekannte Harzsysteme. Bevorzugt sind jedoch Epoxidharzsysteme.

Insbesondere bevorzugt ist die Verwendung der erfindungsgemäßen Initiatoren in härtbaren Systemen, die nicht-thermisch härtbar sind. Diese Systeme, bevorzugt Epoxidharzsysteme, sind bevorzugt mit hochenergetischer Strahlung, wie beispielsweise Elektronenstrahlung, härtbar.
Die erfindungsgemäßen Initiatoren sind in der Regel im Epoxidharzsystem gut löslich. Nach der Härtung zeigt sich zudem ein hoher Vernetzungsgrad.
Ein weiterer Gegenstand der vorliegenden Erfindung betrifft ein
Verfahren zur Aushärtung einer Zusammensetzung, umfassend die Schritte:

(i) Bereitstellung einer erfindungsgemäßen Zubereitung oder eines erfindungsgemäßen Epoxidharzsystems,
(ii) Härten der besagten Zubereitung oder des Epoxidharzsystems (i) durch Wärmezufuhr, welche ausreicht, um die besagte Zubereitung oder das besagte Epoxidharzsystem (i) auszuhärten.

Die Wärmezufuhr kann beispielsweise thermisch oder nicht-thermisch erfolgen, vorzugsweise ist die Wärmezufuhr nicht-thermisch.
Ein weiterer Gegenstand der vorliegenden Erfindung betrifft ein Verfahren zur Aushärtung einer Zusammensetzung, umfassend die Schritte:

(i) Bereitstellung einer erfindungsgemäßen Zubereitung oder eines erfindungsgemäßen Epoxidharzsystems,
(ii) Bestrahlung der besagten Zubereitung oder des Epoxidharzsystems (i) mit Strahlung, welche ausreicht, um die besagte Zubereitung oder das besagte Epoxidharzsystem (i) auszuhärten.

Dabei ist das Epoxidharz des besagten Epoxidharzsystems insbesondere bevorzugt ausgewählt aus der Gruppe, die besteht aus: Glycidylether des Bisphenol A, Epoxyphenol-Novolake, Epoxycresol-Novolake, Epoxyverbindungen mit Bisphenol F, Tetraglycidylether von Tetrakis(4-hydroxyphenyl)ethan, Diglycidylether von 9,9-Bis(4-hydroxyphenyl)fluoren, Glycidylether des Kondensationsproduktes von Dicyclopentadien und Phenol, Triglycidylether von Tris(hydroxyphenyl)methan, 3',4'-Epoxycyclohexylmethyl-3,4-epoxycyclohexancarboxylat, Diglycidylester von Hexahydrophthalsäure, Bis(3,4-epoxycyclohexylmethyl)adipat, hoch molekulare Diglycidyl Ether von Bisphenol A oder Bisphenol F aufkondensiert mit Bisphenol A oder Bisphenol F, Allylglycidylether oder Mischungen daraus.
Die vorliegende Erfindung betrifft ebenfalls das gehärtete Produkt, das durch Härten der erfindungsgemäßen Zubereitung oder des erfindungsgemäßen Epoxidharzsystems hergestellt wird.
Das gehärtete Produkt kann vorzugsweise nicht-thermisch und / oder thermisch gehärtet sein und ist bevorzugt erhältlich nach einem der oben beschriebenen Aushärtungsverfahren. Vorzugsweise erfolgte die Härtung nach einem der vorgenannten Aushärtungsverfahren, in dem eine erfindungsgemäße Zubereitung oder ein erfindungsgemäßes Epoxidharzsystem bereitgestellt wird und anschließend ein Härten der besagten Zubereitung oder des besagten Epoxidharzsystems durch Wärmezufuhr, insbesondere durch Bestrahlen erfolgt, welche ausreicht, um die besagte Zubereitung oder das besagte Epoxidharzsystem auszuhärten.
Das gehärtete Produkt ist vorzugsweise eine Beschichtung, ein Film, ein Werkstoff, ein Komposit-Material, ein Klebstoff oder eine Dichtungsmasse.
Weitere Gegenstände der vorliegenden Erfindung sind:

1. Initiator der allgemeinen Formel (I)

$$\{[M(L)a]X_b\}_n, \qquad (I),$$

mit M = Metallkation, L = Ligand, X = Gegenion,
a = 1 bis 10, bevorzugt 1 bis 6, besonders bevorzugt 1 bis 4,
b = 1 bis 10, bevorzugt 1 bis 6, besonders bevorzugt 1 bis 3,
n = 1 bis ∞, bevorzugt 1 bis 20000, besonders bevorzugt 1 bis1000, ganz besonders bevorzugt 1 bis 500, insbesondere 1 bis 300,
wobei a, b, und n ganze Zahlen und Zahlenbereiche darstellen können und a zusätzlich auch nicht ganze Zahlen darstellen kann.

2. Initiator nach Anspruch 1, dadurch gekennzeichnet, dass das Gegenion (X) ausgewählt ist aus Hexafluoroantimonat ($SbF_6^-$), Hexafluorophosphat ($PF_6^-$), Bortetrafluorid ($BF_4^-$), Hexafluoroaluminat ($AlF_6^{3-}$), Trifluormethansulfonat ($CF_3SO_3^-$), Nitrat ($NO_3^-$), Hexafluoroarsenat ($AsF_6^-$), Tetrakis(pentafluorphenylborat) ($B[C_6F_5]_4^-$), Tetrakis[3.5-bis(trifluormethyl)phenyl]borat ($B[C_6H_3(CF_3)_2]_4^-$), Tetraphenylborat ($B[C_6H_5]_4^-$ Hexafluorotitanat ($TiF_6^{2-}$), Hexafluorogermanat ($GeF_6^{2-}$), Hexafluorosilicat ($SiF_6^{2-}$), Hexafluoronickelat ($NiF_6^{2-}$) oder Hexafluorozirkonat ($ZrF_6^{2-}$). Insbesondere bevorzugt ist als Gegenion (X) Hexafluoroantimonat ($SbF_6^-$).

3. Initiator nach Anspruch 2, dadurch gekennzeichnet, dass das Gegenion (X) Hexafluoroantimonat ($SbF_6^-$) entspricht.

4. Initiator, umfassend mindestens ein Metallkation (M), mindestens einen Liganden (L) und mindestens Hexafluoroantimonat ($SbF_6^-$) als Gegenion, erhältlich durch Komplexbildungsreaktion eines entsprechenden Metall-$SbF_6$-Salzes mit einem entsprechenden Liganden (L).

5. Initiator nach Anspruch 4, dadurch gekennzeichnet, dass mindestens ein Reaktionsprodukt der Komplexbildungsreaktion einen Komplex der allgemeinen Formel (II) umfasst

$$\{[M(L)_a](SbF_6)_b\}_n \qquad (II),$$

mit M = Metallkation, L = Ligand,
a = 1 bis 10, bevorzugt 1 bis 6, besonders bevorzugt 1 bis 4,
b = 1 bis 10, bevorzugt 1 bis 6, besonders bevorzugt 1 bis 3,
n = 1 bis ∞, bevorzugt 1 bis 20000, besonders bevorzugt 1 bis1000, ganz besonders bevorzugt 1 bis 500, insbesondere 1 bis 300,
wobei a, b, und n ganze Zahlen und Zahlenbereiche darstellen können und a zusätzlich auch nicht ganze Zahlen darstellen kann.

6. Initiator nach einem der vorhergehenden Ansprüche 1 bis 5, dadurch gekennzeichnet, dass das Metallkation (M) ausgewählt ist aus der Gruppe der Übergangsmetalle der vierten oder fünften Periode oder der zweiten oder dritten Hauptgruppe des Periodensystems.

7. Initiator nach einem der vorhergehenden Ansprüche 1 bis 6, dadurch gekennzeichnet, dass das Metallkation (M) ausgewählt ist aus der Gruppe umfassend Ag, Fe, Mg, Co, Cu, Al oder Ti.

8. Initiator nach einem der vorhergehenden Ansprüche 1 bis 7, dadurch gekennzeichnet, dass der Ligand (L) eine Verbindung mit mindestens einer (C-C)-Doppel- und / oder Dreifachbindung ist.

9. Initiator nach einem der vorhergehenden Ansprüche 1 bis 8, dadurch gekennzeichnet, dass der Ligand (L) ein substituiertes oder unsubstituiertes, verzweigtes oder nicht verzeigtes Alken oder Alkin mit 1 bis 30 C-Atomen ist.

10. Initiator nach einem der vorhergehenden Ansprüche 1 bis 9, dadurch gekennzeichnet, dass der Ligand (L) ein Ether, vorzugsweise ein cyclischer Ether, ganz besonders bevorzugt ein Kronenether ist.

11. Initiator nach einem der vorhergehenden Ansprüche 1 bis 10, dadurch gekennzeichnet, dass der Ligand (L) ausgewählt ist aus Propen, 1-Buten, 1-Penten, 1-Hexen, 1-Octen, 1-Decen, Isopren, Norbornen, Cyclohexen, Cycloocten, Cyclodecen, 1,4-Cyclohexadien, 4-Vinylcyclohexen, trans-2-Octen, Styrol, 5-Norbornen-2-carbonsäure, Butadien, 1,5-Hexadien, 1,6-Heptadien, 1,7-Octadien, 1,9-Decadien, Sorbinsäureethylester, 1,3-Cyclohexadien, 1,3-Cyclooctadien, 1,5-Cyclooctadien, Norbornadien, Dicyclopentadien, Cycloheptatrien, trans,trans,trans-1,5,9-Cyclododecatrien, trans,trans,cis-1,5,9-Cyclododecatrien, Cyclooctatetraen, Squalen, Diallylcarbonat, Diallylether, Diallyldimethylsilan, Nopol, Cyclopentadien, Ethylvinylether, Limonen, 1,2-Dihydronaphthalin, Zimtsäureethylester, Ethylacrylat, Ethylmethacrylat, Stilben, Ölsäuremethylester, Linolsäuremethylester, Linolensäuremethylester, Diphenylacetylen, Dimethylacetylen, 3-Hexin, 1,8-Cydotetradecadiin, Propargylalkohol, Vinylacetylen, 15-Krone-5, 18-Krone-6, 1-Phenylpropin, 1,8-Nonadiin, 18-Krone-6-tetracarbonsäure.

12. Initiator ausgewählt aus
$[Ag(Cyclohexen)_{1-4}]SbF_6$, $[Ag(Cycloocten)_{1-4}]SbF_6$,
$[Ag(Cyclododecen)_{1-4}]SbF_6$, $[Ag(trans\text{-}2\text{-}Octen)_{1-4}]SbF_6$,
$[Ag(Styrol)_{1-4}]SbF_6$, $[Ag(5\text{-}Norbornen\text{-}2\text{-}carbonsäure)_{1-4}]SbF_6$,
$\{[Ag(1,5\text{-}Hexadien)_{1-4}]SbF_6\}_{1-\infty}$, $\{[Ag(1,7\text{-}Octadien)_{1.5}]SbF_6\}_{1-\infty}$,
$\{[Ag(1,7\text{-}Octadien)_{1.5}]SbF_6\}_{1000}$, $\{[Ag(1,7\text{-}Octadien)_{1.5}]SbF_6\}_{500}$,
$\{[Ag(1,9\text{-}Decadien)_{1-4}]SbF_6\}_{1-\infty}$, $\{[Ag(Sorbinsäureethylester)_{1-4}]SbF_6\}_{1-\infty}$,
$[Ag(1,3\text{-}Cyclohexadien)_{1-4}]SbF_6\}_{1-\infty}$, $\{[Ag(1,3\text{-}Cyclooctadien)_{1-4}]SbF_6\}_{1-\infty}$,
$Ag(1,5\text{-}Cyc!ooctad!en)_2]SbF_6$, $\{[Ag(Norbornad!en)_{1-4}]SbF_6\}_{1-\infty}$, $\{[Ag(Dicyclopentadien)_{1-4}]SbF_6\}_{1-\infty}$, $\{[Ag(Cycloheptatrien)_{1-4}]SbF_6\}_{1-\infty}$,
$\{[Cu(1,7\text{-}Octadien)_{1-4}]SbF_6)_{1-\infty}$, $[Cu(1,5\text{-}Cyclooctadien)_2]SbF_6$,

$[Cu(15\text{-Krone-}5)]SbF_6$, $[Fe(15\text{-Krone-}5)](SbF_6)_3$, $[Fe(18\text{-Krone-}6)](SbF_6)_3$, $[Mg(15\text{-Krone-}5)](SbF_6)_2$, $[Co(15\text{-Krone-}5)](SbF_6)_2$, $[Ag(1R\text{-}(\text{-})\text{-Nopol})_{1\text{-}4}]SbF_6$, $[Ag(\text{Allylglycidylether})_{1\text{-}4}]SbF_6$, $\{[Ag(\text{trans,trans,cis-1,5,9-Cyclododecatrien})_{1\text{-}4}]SbF_6\}_{1\text{-}\infty}$, $\{[Ag(\text{trans,trans,trans-1,5,9-Cyclododecatren})_{1\text{-}4}]SbF_6\}_{1\text{-}\infty}$, $\{[Ag(\text{Cyclooctatetraen})_{1\text{-}4}]SbF_6\}_{1\text{-}\infty}$, $\{[Ag(\text{Squalen})_{1\text{-}4}]SbF_6\}_{1\text{-}\infty}$.

13. Zubereitung, enthaltend mindestens einen Initiator nach einem der Ansprüche 1 bis 12.

14. Zubereitung nach Anspruch 13, dadurch gekennzeichnet, dass die Zubereitung ein oder mehrere zusätzliche Bestandteile enthält vorzugsweise ausgewählt aus Füllstoffen, Stabilisatoren, Härterbeschleunigern, Antioxidantien, Verdickern, Katalysatoren, Reaktivverdünnern, Weichmachern, Flammschutz-Additiven, Schlagzäh-Additiven, wie beispielsweise Elastomere, Thermoplaste, Core-Shell Partikel, Nanopartikel, Block-Copolymere, Nanoröhrchen.

15. Zubereitung nach einem der vorhergehenden Ansprüche 13 oder 14, dadurch gekennzeichnet, dass die Konzentration der Initiatoren 0.01 bis 10 Gew%, bevorzugt 0.5 bis 3 Gew%, und besonders bevorzugt 1 bis 2 Gew% bezogen auf die Gesamtzusammensetzung beträgt.

16. Zubereitung, enthaltend

- 0.5 Gew% bis 80 Gew% Initiator gemäß Formel (I) oder (II)
- 0 Gew% bis 99.5 Gew% additive Harze
- 0 Gew% bis 50 Gew% Thermoplast,
- 0 Gew% bis 50 Gew% weitere Zusatzstoffe.

17. Zubereitung nach einem der vorhergehenden Ansprüche 13 bis 16, dadurch gekennzeichnet, dass die Zubereitung ausgewählt ist aus der Gruppe der Epoxidharzsysteme, Benzoxazinsysteme, Polyurethan-Systeme, Acrylatharzsysteme, Epoxyacrylatharzsysteme, Cyanacrylatharzsysteme, Triazinharzsysteme, Polyimidharzsysteme, Esteracrylatharzsysteme oder ein thermoplastisches Harzsystem darstellt.

18. Zubereitung nach einem der vorhergehenden Ansprüche 13 bis 17, dadurch gekennzeichnet, dass die Zubereitung thermisch und / oder nicht thermisch härtbar ist.

19. Zubereitung nach einem der vorhergehenden Ansprüche 13 bis 17, dadurch gekennzeichnet, dass die Zubereitung durch Röntgenstrahlen, Gammastrahlen, Elektronenstrahlen, UV-Strahlen und / oder Mikrowellenstrahlen härtbar ist.

20. Epoxidharzsystem, enthaltend mindestens einen Initiator nach einem der Ansprüche 1 bis 12.

21. Epoxidharzsystem, nach Anspruch 20, dadurch gekennzeichnet, dass das System thermisch und / oder nicht-thermisch härtbar ist.

22. Epoxidharzsystem nach Anspruch 21, dadurch gekennzeichnet, dass das System durch Strahlung ausgewählt aus Röntgenstrahlen, Gammastrahlen, Elektronenstrahlen, UV-Strahlen und / oder Mikrowellenstrahlen härtbar ist.

23. Epoxidharzsystem nach einem der vorhergehenden Ansprüche 20 bis 22, dadurch gekennzeichnet, dass das System bei 3 eV bis 25 MeV, insbesondere bei 6 eV bis 20 MeV, bevorzugt bei 1 keV bis 15 MeV, ganz besonders bevorzugt bei 1 keV bis 10 MeV, härtbar ist.

24. Epoxidharzsystem nach einem der vorhergehenden Ansprüche 20 bis 23, dadurch gekennzeichnet, dass mit einer frei wählbaren Bestrahlungseinheit von 1 bis 1000 kGy, bevorzugt 1 bis 300 kGy, vorzugsweise von 10 bis 200 kGy gehärtet wird.

25. Verwendung von Initiatoren nach einem der Ansprüche 1 bis 12 in Zubereitungen nach einem der Ansprüche 13 bis 19 oder in einem Epoxidharzsystem nach einem der Ansprüche 20 bis 24 als Klebstoffe, Komposit-Materialien, Dichtungsmassen, Werkstoffe und zur Beschichtung von Oberflächen.

26. Verwendung von Initiatoren nach einem der Ansprüche 1 bis 12 in härtbaren Systemen für eine thermische und / oder nicht- thermisch (initiierte) Härtung.

27. Verwendung nach Anspruch 26 wobei das härtbare System nicht-thermische härtbar ist.

28. Verfahren zur Aushärtung einer Zusammensetzung, umfassend die Schritte:

(i) Bereitstellung einer Zubereitung nach einem der Ansprüche 13 bis 19 oder eines Epoxidharzsystems nach Anspruch 20,
(ii) Härten der besagten Zubereitung oder des Epoxidharzsystems (i) durch Wärmezufuhr, welche ausreicht, um die besagte Zubereitung oder das besagte Epoxidharzsystem (i) auszuhärten.

29. Verfahren zur Aushärtung einer Zusammensetzung, umfassend die Schritte:

(i) Bereitstellung einer Zubereitung nach einem der Ansprüche 13 bis 19 oder eines Epoxidharzsystems nach Anspruch 20,
(ii) Bestrahlung der besagten Zubereitung oder des Epoxidharzsystems (i) mit Strahlung, welche ausreicht, um die besagte Zubereitung oder das besagte Epoxidharzsystem (i) auszuhärten.

30. Verfahren nach Anspruch 28 oder 29, wobei das Epoxidharz des besagten Epoxidharzsystems aus der Gruppe ausgewählt wird, die besteht aus: Glycidylether des Bisphenol A, Epoxyphenol-Novolake, Epoxycresol-Novolake, Epoxyverbindungen mit Bisphenol F, Tetraglycidylether von Tetrakis(4-hydroxyphenyl)ethan, Diglycidylether von 9,9-Bis(4-hydroxyphenyl)fluoren, Glycidylether des Kondensationsproduktes von Dicyclopentadien und Phenol, Triglycidylether von Tris(hydroxyphenyl)methan, 3',4'-Epoxycyclohexylmethyl-3,4-epoxycyclohexancarboxylat, Diglycidylester von Hexahydrophthalsäure, Bis(3,4-epoxycyclohexylmethyl)adipat, hoch molekulare Diglycidyl Ether von Bisphenol A oder Bisphenol F aufkondensiert mit Bisphenol A oder Bisphenol F, Allylglycidylether oder Mischungen daraus.

31. Gehärtetes Produkt, das durch Härten einer Zubereitung nach einem der Ansprüche 13 bis 19 oder einem Epoxidharzsystem nach Anspruch 20 hergestellt wird.

32. Gehärtetes Produkt nach Anspruch 31, dadurch gekennzeichnet, dass das gehärtete Produkt nicht-thermisch und / oder thermisch gehärtet wurde.

33. Gehärtetes Produkt nach einem der vorhergehenden Ansprüche 31 oder 32, dadurch gekennzeichnet, dass das Produkt nach einem Verfahren nach einem der Ansprüche 28 bis 30 erhältlich ist.

34. Gehärtetes Produkt nach einem der vorhergehenden Ansprüche 31 bis 33, dadurch gekennzeichnet, dass das Produkt eine Beschichtung, ein Film, ein Werkstoff, ein Komposit-Material, ein Klebstoff, eine Dichtungsmasse ist.

Die folgenden Beispiele erläutern die Erfindung, ohne sie jedoch darauf zu beschränken.

Beispiele

Beispiel 1: Synthese von Silberalkenkomplexen und weiterer Komplexe mit $SbF_6^-$

Als Ausgangssubstanz für die Silberalkenkomplexe wurde das kommerziell verfügbare $AgSbF_6$ (Aldrich, 98% oder Chempur, 95+%) gewählt. Die Synthese der Komplexe erfolgte in Anlehnung an literaturbekannte Methoden (H.W. Qinn, R.L. Van Gilder, Can. J. Chem. 1970, 48, 2435; A. Albinati, S.V. Meille, G. Carturan, J. Organomet. Chem. 1979, 182, 269; H. Masuda, M. Munakata, S. Kitagawa, J. Organomet. Chem. 1990, 391, 131; A.J. Canty, R. Colton, Inorg. Chim. Acta 1994, 220, 99). Dabei wurde $AgSbF_6$ in Toluol oder THF gelöst und mit einem Überschuss an Alken, vorzugsweise vier Äquivalenten umgesetzt. Die Alkenkomplexe $\{[Ag(Alken)_a]SbF_6\}_n$ sind schwer löslich und fallen aus dem Reaktionsgemisch aus und können dann durch Filtration isoliert werden. Danach werden die Substanzen im Hochvakuum getrocknet.
Im Fall weiterer Metalle und Liganden wurde zunächst das jeweilige Metallchlorid mit $AgSbF_6$ in einem geeigneten Lösungsmittel wie z.B. Methanol umgesetzt, das ausgefallene AgCl durch Filtration abgetrennt und die resultierende Lösung des Metallhexafluoroantimonats mit dem jeweiligen Liganden umgesetzt. Danach wurde das Lösungsmittel entfernt und die Verbindung wurde im Hochvakuum getrocknet.

Beispiel 2: Bestimmung des Vernetzungsgrades

Der Vernetzungsgrad des (Epoxid-)Harzes wurde mittels FT-IR aus der Abnahme der Fläche unterhalb der Epoxidbande (915 $cm^{-1}$) ermittelt. Die Abnahme der Epoxidbande korreliert mit dem Grad der Vernetzung. Während der Vernetzung des Harzes verringern sich die Anzahl der Epoxidgruppen im Material und somit auch die mittels FT-IR ermittelte Fläche unter der Epoxidbande. Als Referenzbande wurde die Benzolringbande (1505 $cm^{-1}$) herangezogen. Der Vernetzungsgrad wurde dann mittels folgender Gleichung berechnet

$$\text{Vernetzungsrad (\%)} = \left[1- \frac{(A_1/A_2)}{(A_3/A_4)}\right] * 100$$

A1 : Fläche unter der Epoxidbande (915 $cm^{-1}$) - gehärtet
A2: Fläche unter der Referenzbande, Benzolringbande (1505 $cm-^{1}$) -gehärtet
A3 : Fläche unter der Epoxidbande (915 $cm-^{1}$) - ungehärtet
A4: Fläche unter der Referenzbande, Benzolringbande (1505 $cm-^{1}$) -ungehärtet

Beispiel 3: Bruchmechanische Untersuchungen

Die statische Bruchzähigkeit der Reinharzsysteme wurde unter Mode I Belastung nach ISO 13586 bestimmt. Zur Durchführung der bruchmechanischen Versuche wurde eine Universalprüfmaschine (UPM) der Fa. Zwick (Typ Z020) eingesetzt. Als Prüfkörper dienten CT-Prüfkörper mit einer Probenweite W von 33 mm. Die Prüfgeschwindikeit betrug 10 mm/min. Alle Messungen wurden bei 23°C und 50% Luftfeuchtigkeit durchgeführt.

Beispiel 4: Thermische Härtung und Elektronenstrahlhärtung (EB) einer Harzzusammensetzung, enthaltend einen erfindungsgemäßen Initiator

Die bei Raumtemperatur flüssigen, viskosen oder festen Harze bzw. Harzformulierungen (69,3Gew% DEN431 + 29,7Gew% DEN438) werden bei Raumtemperatur mit dem entsprechenden Initiator (1Gew% {[Ag(1,7-Octadien)$_{1\ 5}$] $SbF_6$}∞) vermengt, auf maximal 80°C erwärmt und so lange gerührt, bis der Initiator vollständig gelöst im Harz vorliegt. Anschließend wird auf Raumtemperatur abgekühlt.

a) Elektronenstrahl-initiierte Härtung

Zur Härtung der oben hergestellten Harzproben durch Elektronenstrahlen wird die Harzformulierung zunächst bei max. 80°C im Vakuumtrockenschrank entgast, in Formen (ca. 20cm x 20cm x 4 mm) gegossen und die Oberfläche mittels eines Holzstabes glatt gezogen. Hierbei ist auf vollständige Blasenfreiheit zu achten. Die Probenkörper werden anschließend durch die Elektronenstrahlanlage (10 MeV) gefahren, wobei die Härtung in vier Schritten, bei denen jeweils eine Dosis von 33 kGy eingebracht wird (insgesamt 132 kGy), erfolgt.

b) Thermisch-initiierte Härtung

Zur thermischen Härtung der hergestellten Harzproben wird die 80°C heiße Harzmischung in ebenfalls auf 80°C erwärmte Aluminiumformen gegossen, dann die Oberfläche mittels Holzstab glattgezogen und anschließend 45 - 60 min im Vakuumtrockenschrank entgast (bei 80°C). Anschließend werden die Proben in einem Heizofen gemäß dem Temperaturprogramm

1.) Von 25°C bis 200°C bei 1°C/min
2.) Bei 200°C für 2 Stunden
3.) Von 200°C bis 25°C bei 2°C/min gehärtet.

Zur besseren Ablösung der gehärteten Harzproben aus der Form werden diese zuvor mit einer dünnen Schicht Frekote-700NC (Henkel Loctite) Trennmittel beschichtet.

Tabelle 1: Ergebnisse Elektronenstrahlhärtung (EB) und thermische Härtung

| | EB Härtung | Thermische Härtung |
|---|---|---|
| Vernetzungsgrad (%) | 90.8 | 94.8 |
| Tg tan delta (°C) | 190 | 211 |
| Tg loss (°C) | 160 | 187 |
| Tg onset log (°C) | 153 | 180 |
| E-Module (MPa) | 3600 | 3300 |
| $K_{Ic}$ (MPa.m1/2) | 0.466 | 0.421 |

Tabelle 1 zeigt, dass das erfindungsgemäße Silbersalz im Harz sowohl durch Elektronenstrahlung als auch durch thermische Energie eine kationische Polymerisation initiiert und ein hoher Vernetzungsgrad erreicht wird. Zudem zeichnet sich ab, dass die Harze nach der Härtung hohe E-Module und Bruchzähigkeiten aufweisen.

Beispiel 5: UV-Härtung einer Harzzusammensetzung, enthaltend einen erfindungsgemäßen Initiator

Zur Durchführung der UV-initiierten Härtung wurde ein DGEBA Harz (DER 331 P von DOW Chemicals Co.) mit 1Gew% $\{[Ag(1,7\text{-Octadien})_{1\ 5}]SbF_6\}_\infty$ versetzt und bei max. 80°C unter Rühren homogenisiert. Die erhaltene Zusammensetzung wurde bei ca. 30°C in ca. 1 mm Schichtdicke auf Aluminiumplatten (Al2024-Blechen), die vorher mit Aceton gereinigt wurden, gerakelt und anschließend mittels UV-Strahlung (H-Strahler der Fusion Anlage / 100% Leistung / Abstand 30 cm) gehärtet.

Tabelle 2: Ergebnisse UV-Härtung

| Bestrahlung | Vernetzungsgrad (%) | | Tg (DSC) (°C) |
|---|---|---|---|
| | Obere Seite | Untere Seite | |
| 15s | 64 | 29 | |
| 30s | 79 | 40 | 57 |
| 60s | 87 | 59 | 89 |
| 120s | 87 | 59 | 87 |
| 180s | 89 | 59 | 83 |
| 240s | 91 | 62 | 89 |

Die Ergebnisse zeigen, dass das erfindungsgemäße Silbersalz ebenfalls UV-aktiv ist und eine kationische Polymerisation von Epoxidharzen initiiert.
Die Silbersalze führen demnach auch mittels UV-Bestrahlung zu hohen Vernetzungsgraden an der Oberfläche der Harzformulierungen. Der Vernetzungsgrad der Oberfläche steigt mit der Bestrahlungszeit. Die Glasübergangstemperaturen (Tg) der Formulierungen steigen ebenso mit der Bestrahlungszeit an. Die Vernetzungsgrade an der Unterseite der Proben sind im Vergleich zu den Oberflächendaten, welche an der der Strahlungsquelle zugewandten Seite ermittelt wurden, niedriger, was sich durch die allgemein bei der UV-Härtung geringe Eindringtiefe der Strahlung (bedingt durch geringe Bestrahlungsenergie) erklären lässt.

Beispiel 6: Elektronenstrahlhärtung mit unterschiedlichen Initiatoren

Tabelle 3: Ergebnisse Elektronenstrahlhärtung

| Initiator | | Harz | | Tg (Tan δ) | E- Modul | Vernetzungsgrad |
|---|---|---|---|---|---|---|
| | Gew% | Typ | Gew% | | MPa | (%) |
| Ag[Cyclohepta-1,3,5-trien)$_a$]SbF$_6$ | 2 | 1 | | 177 | 3500 | 95.5 |
| Ag[Cyclohepta-1,3,5-trien)$_a$]SbF$_6$ | 2 | 2 | | 233 | 3000 | 96.3 |
| Ag[Cyclohepta-1,3,5-trien)$_a$]SbF$_6$ | 1 | 1 | 99 | 182 | 3400 | 93.6 |
| Ag[Cyclohepta-1,3,5-trien)$_a$]SbF$_6$ | 1 | 1<br>2 | 69,3<br>29,7 | 201 | 3400 | 93.2 |
| Ag[Cyclohexen)$_a$]SbF$_6$ | 1 | 1 | 99 | 185 | 3500 | 91.1 |
| Ag[Cyclohexen)$_a$]SbF$_6$ | 2 | 1 | 98 | 190 | 3100 | 91.4 |
| Ag[Cyclohexen)$_a$]SbF$_6$ | 2 | 2 | 98 | 201 | 3500 | 92.4 |
| Ag[1,7-octadien)$_a$]SbF$_6$ | 1 | 1 | 99 | 190 | 3000 | 94.4 |
| Ag[1,7-octadien)$_a$]SbF6 | 1,5 | 1 | 98 | 175 | 3100 | 94.3 |
| Ag[1,7-octadien)a]SbF6 | 2 | 1 | 98 | 190 | 3100 | 95.1 |
| Ag[COD)$_2$]SbF$_6$ | 2 | 1 | 98 | 187 | 3400 | 96.8 |
| Ag[COD)$_2$]SbF$_6$ | 3 | 1 | 97 | 183 | 3500 | 96.4 |
| Ag[(1,7-octadien)$_a$]SbF$_6$ | 1,5 | 2 | 98 | 211 | 3800 | 95.0 |
| Ag[(1,7-octadien)$_a$]SbF$_6$ | 2 | 2 | 98 | 217 | 3300 | 96.9 |
| Ag[(1,7-octadien)$_a$]SbF$_6$ | 1 | 1<br>2 | 49,5<br>49,5 | 203 | 3900 | 92.4 |
| Ag[(1,7-octadien)$_a$]SbF$_6$ | 2 | 1<br>2 | 49<br>49 | 201 | 3100 | 96.8 |
| Ag(1,7-octadien)$_a$]SbF$_6$ | 1 | 1<br>2 | 69,3<br>29,7 | 190 | 3600 | 90.8 |
| Ag[(1,7-octadien)$_a$]SbF$_6$ | 2 | 1<br>2 | 68,6<br>29,4 | 199 | 3500 | 95.1 |
| Ag[(1,7-octadien)$_a$]SbF$_6$ | 1 | 1<br>2 | 89,1<br>9,9 | 185 | 3000 | 91.8 |
| Ag[(1,7-octadien)$_a$]SbF$_6$ | 1,5 | 1<br>2 | 68,9<br>29,5 | 198 | 3700 | 96.1 |
| Ag[1,7-octadien)$_a$]SbF$_6$ | 2 | 1<br>2 | 88,2<br>9,8 | 188 | 3800 | 93.5 |
| Ag[1,7-octadien)$_a$]SbF$_6$ | 1 | 1 | 99 | 184 | 3600 | 99.2 |
| Ag[1,7-octadien)$_a$]SbF$_6$ | 1 | 2 | 99 | 204 | 3600 | 99.4 |
| Cyracure UV 6976* | 3 | 1 | 97 | 180 | 3300 | 91.0 |
| Cyracure UV 6976* | 3 | 2 | 96 | 217 | 3200 | 83.8 |
| Deuteron UV 1242** | 2 | 1 | 98 | 162 | 3500 | 76.1 |
| Rhodorsil 2074*** | 0,5 | 1 | 99 | 200 | 3300 | 93.7 |
| Rhodorsil 2074*** | 1 | 1 | 99 | 205 | 3500 | 96.4 |
| Rhodorsil 2074*** | 0,5 | 2 | 99 | 215 | 4300 | 97.4 |
| Rhodorsil 2074*** | 1 | 2 | 99 | 233 | 3500 | 98.2 |

(fortgesetzt)

| Initiator | | Harz | | Tg (Tan δ) | E- Modul | Vernetzungsgrad |
|---|---|---|---|---|---|---|
| | Gew% | Typ | Gew% | | MPa | (%) |
| Rhodorsil 2074*** | 1 | 1<br>2 | 69,3<br>29,7 | 211 | 3600 | 97.0 |
| *von Dow<br>**von Deuteron<br>***von Rhodia<br>Harz-Typ 1 = DEN431 P Novolac von Dow (EEW: 176±3, Viskosität 1400±300 mPa.s, 52°C)<br>Harz-Typ 2 = DEN438 Novolac von Dow (EEW: 179±3, Viskosität 35500±3100 mPa.s, 52°C) | | | | | | |

Beispiel 7: Lagerstabilität

Die Lagerstabilität wurde durch Messung der relativen Viskosität mittels eines Topfzeitmessgeräts bei 80 °C vorgenommen.

Tabelle 4: Relative Viskosität des Harzes DEN438 mit 1 Gew% Initiator

| Zeit (min) | Viskosität [η] | |
|---|---|---|
| | Rhodorsil 2074 | $\{[Ag(1,7\text{-Octadien})_{1.5}]sbF_6\}\infty$. |
| 650 | 0 | 0.6 |
| 700 | 14.7 | 1.9 |
| 750 | 62.9 | 4.6 |

Beispiel 8: Löslichkeit der Initiatoren im Harz

Die Bestimmung der Löslichkeiten der erfindungsgemäßen Initiatoren und der Initiatoren des Stands der Technik im Harz DEN 431 erfolgte bei 70°C innerhalb von 2 Stunden.

Tabelle 5: Löslichkeit von 1 Gew.% Initiator im Harz

| Initiator | Löslichkeit |
|---|---|
| $\{[Ag(\text{Cycloheptatrien})_{1\text{-}4}]SbF_6\}_{1\text{-}\infty}$ | ++ |
| $[Ag(1,5\text{-Cyclooctadien})_2]SbF_6$ | + |
| $\{[Ag(1,7\text{-Octadien})_{1.5}]SbF_6\}_\infty$ | ++ |
| Cyracure UV 6976 | ++ |
| Rhodorsil 2074 | ++ |
| Deuteron UV 1242 | ++ |
| Bedeutung: - = schlecht löslich<br>+ = gut löslich<br>++ = sehr gut löslich | |

**Patentansprüche**

**1.** Initiator der allgemeinen Formel (I)

$$\{[M(L)_a]X_b\}_n \qquad (I),$$

mit M = Metallkation, L = Ligand mit mindestens einer (C-C)-Doppel- und / oder Dreifachbindung, X = Gegenion,

a = 1 bis 10, bevorzugt 1 bis 6, besonders bevorzugt 1 bis 4,
b = 1 bis 10, bevorzugt 1 bis 6, besonders bevorzugt 1 bis 3,
n = 2 bis ∞, bevorzugt 2 bis 20000, besonders bevorzugt 2 bis 1000, ganz besonders bevorzugt 2 bis 500, insbesondere 2 bis 300,
wobei a, b, und n ganze Zahlen und Zahlenbereiche darstellen können und a zusätzlich auch nicht ganze Zahlen darstellen kann und der Initiator ein Koordinationspolymer ist.

**2.** Initiator nach Anspruch 1, **dadurch gekennzeichnet, dass** das Gegenion (X) ausgewählt ist aus Hexafluoroantimonat ($SbF_6^-$), Hexafluorophosphat ($PF_6^-$), Bortetrafluorid ($BF_4^-$), Hexafluoroaluminat ($AlF_6^{3-}$), Trifluormethansulfonat ($CF_3SO_3^-$), Nitrat ($NO_3^-$), Hexafluoroarsenat ($AsF_6^-$), Tetrakis(pentafluorphenylborat) ($B[C_6F_5]_4^-$), Tetrakis[3.5-bis(trifluormethyl)phenyl]borat ($B[C_6H_3(CF_3)_2]_4^-$), Tetraphenylborat ($B[C_6H_5]_4^-$), Hexafluorotitanat ($TiF_6^{2-}$), Hexafluorogermanat ($GeF_6^{2-}$), Hexafluorosilicat ($SiF_6^{2-}$), Hexafluoronickelat ($NiF_6^{2-}$) oder Hexafluorozirkonat ($ZrF_6^{2-}$). Insbesondere bevorzugt ist als Gegenion (X) Hexafluoroantimonat ($SbF6^-$).

**3.** Initiator nach Anspruch 2, **dadurch gekennzeichnet, dass** das Gegenion (X) Hexafluoroantimonat ($SbF_6^-$) entspricht.

**4.** Initiator nach einem der vorhergehenden Ansprüche 1 bis 3, **dadurch gekennzeichnet, dass** das Metallkation (M) ausgewählt ist aus der Gruppe der Übergangsmetalle der vierten oder fünften Periode oder der zweiten oder dritten Hauptgruppe des Periodensystems.

**5.** Initiator nach einem der vorhergehenden Ansprüche 1 bis 4, **dadurch gekennzeichnet, dass** das Metallkation (M) ausgewählt ist aus der Gruppe umfassend Ag, Fe, Mg, Co, Cu, Al oder Ti.

**6.** Initiator nach einem der vorhergehenden Ansprüche 1 bis 5, **dadurch gekennzeichnet, dass** der Ligand (L) ausgewählt ist aus 1,4-Cyclohexadien, 4-Vinylcyclohexen, Butadien, 1,5-Hexadien, 1,6-Heptadien, 1,7-Octadien, 1,9-Decadien, Sorbinsäureethylester, 1,3-Cyclohexadien, 1,3-Cyclooctadien, 1,5-Cyclooctadien, Norbornadien, Dicyclopentadien, Cycloheptatrien, trans,trans,trans-1,5,9-Cyclododecatrien, trans,trans,cis-1,5,9-Cyclododecatrien, Cyclooctatetraen, Squalen, Diallylcarbonat, Diallylether, Diallyldimethylsilan, Cyclopentadien, Limonen, Linolsäuremethylester, Linolensäuremethylester, 1,8-Cyclotetradecadün, Vinylacetylen, 1,8-Nonadiin.

**7.** Initiator ausgewählt aus
$\{[Ag(1,5\text{-Hexadien})_{1-4}]SbF_6\}_{1-\infty}$, $\{[Ag(1,7\text{-Octadien})_{1\cdot5}]sbF_6\}\infty$,
$\{[Ag(1,7\text{-Octadien})_{1\cdot5}]SbF_6\}_{1000}$, $\{[Ag(1,7\text{-Octadien})_{1\cdot5}]SbF_6\}_{500}$,
$\{[Ag(1,9\text{-Decadien})_{1-4}]SbF_6\}_{1-\infty}$, $\{[Ag(\text{Sorbinsäureethylester})_{1-4}]SbF_6\}_{1-\infty}$,
$[Ag(1,3\text{-Cyclohexadien})_{1-4}]SbF_6\}_{1-\infty}$, $\{[Ag(1,3\text{-Cyclooctadien})_{1-4}]SbF_6\}_{1-\infty}$,
$\{[Ag(\text{Norbornadien})_{1-4}]SbF_6\}_{1-\infty}$, $\{[Ag(\text{Dicyclopentadien})_{1-4}]SbF_6\}_{1-\infty}$,
$\{[Ag(\text{Cycloheptatrien})_{1-4}]SbF_6\}_{1-\infty}$, $\{[Cu(1,7\text{-Octadien})_{1-4}]SbF_6\}_{1-\infty}$,
$\{[Ag(\text{trans,trans,cis-1,5,9-Cyclododecatrien})_{1-4}]SbF_6\}_{1-\infty}$,
$\{[Ag(\text{trans,trans,trans-1,5,9-Cyclododecatrien})_{1-4}]\ SbF_6\}_{1-\infty}$,
$\{[Ag(\text{Cyclooctatetraen})_{1-4}]SbF_6\}_{1-\infty}$, $\{[Ag(\text{Squalen})_{1-4}]SbF_6\}_{1-\infty}$.

**8.** Zubereitung, enthaltend

- 0.5 Gew% bis 80 Gew% Initiator gemäß Anspruch 1,
- 0 Gew% bis 99.5 Gew% additive Harze,
- 0 Gew% bis 50 Gew% Thermoplast,
- 0 Gew% bis 50 Gew% weitere Zusatzstoffe.

**9.** Zubereitung nach Anspruch 8, **dadurch gekennzeichnet, dass** die Zubereitung ausgewählt ist aus der Gruppe der Epoxidharzsysteme, Benzoxazinsysteme, Polyurethan-Systeme, Acrylatharzsysteme, Epoxyacrylatharzsysteme, Cyanacrylatharzsysteme, Triazinharzsysteme, Polyimidharzsysteme, Esteracrylatharzsysteme oder ein thermoplastisches Harzsystem darstellt.

**10.** Zubereitung nach Anspruch 8 oder 9, **dadurch gekennzeichnet, dass** die Zubereitung thermisch und / oder nicht thermisch härtbar ist.

**11.** Zubereitung nach einem der vorhergehenden Ansprüche 8 bis 10, **dadurch gekennzeichnet, dass** die Zubereitung

durch Röntgenstrahlen, Gammastrahlen, Elektronenstrahlen, UV-Strahlen und / oder Mikrowellenstrahlen härtbar ist.

**12.** Epoxidharzsystem, enthaltend mindestens einen Initiator nach einem der Ansprüche 1 bis 7.

**13.** Verwendung von Initiatoren nach einem der Ansprüche 1 bis 7 in härtbaren Systemen für eine thermische und / oder nicht- thermisch (initiierte) Härtung.

**14.** Verfahren zur Aushärtung einer Zusammensetzung, umfassend die Schritte:

(i) Bereitstellung einer Zubereitung nach einem der Ansprüche 8 bis 11 oder eines Epoxidharzsystems nach Anspruch 12,
(ii) Härten der besagten Zubereitung oder des Epoxidharzsystems (i) durch Wärmezufuhr, welche ausreicht, um die besagte Zubereitung oder das besagte Epoxidharzsystem (i) auszuhärten.

**15.** Verfahren zur Aushärtung einer Zusammensetzung, umfassend die Schritte:

i. Bereitstellung einer Zubereitung nach einem der Ansprüche 8 bis 11 oder eines Epoxidharzsystems nach Anspruch 12,
ii. Bestrahlung der besagten Zubereitung oder des Epoxidharzsystems (i) mit Strahlung, welche ausreicht, um die besagte Zubereitung oder das besagte Epoxidharzsystem (i) auszuhärten.

**16.** Gehärtetes Produkt, das durch Härten einer Zubereitung nach einem der Ansprüche 8 bis 11 oder einem Epoxidharzsystem nach Anspruch 12 hergestellt wird.

**17.** Gehärtetes Produkt nach Anspruch 16, **dadurch gekennzeichnet, dass** das Produkt eine Beschichtung, ein Film, ein Werkstoff, ein Komposit-Material, ein Klebstoff, eine Dichtungsmasse ist.

Europäisches Patentamt
European Patent Office
Office européen des brevets

# EUROPÄISCHER RECHERCHENBERICHT

Nummer der Anmeldung
EP 12 18 5359

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GLENN S. LEWANDOS ET AL: "Silver(I) trifluoromethanesulfonate [pi]-complexes of olefins and alkynes. Stability and structure", JOURNAL OF ORGANOMETALLIC CHEMISTRY, Bd. 118, Nr. 3, 1. Oktober 1976 (1976-10-01), Seiten 363-374, XP55040774, ISSN: 0022-328X, DOI: 10.1016/S0022-328X(00)93217-0 * Seite 366 - Seite 369; Abbildung 2; Tabelle 1; Verbindung III * ----- | 1,2,4-7 | INV. C08G59/68 C07F1/10 C07F1/08 C08L63/00 |
| A | US 5 089 536 A (PALAZZOTTO MICHAEL C [US]) 18. Februar 1992 (1992-02-18) * Spalte 3, Zeile 56 - Spalte 4, Zeile 12 * * Spalte 4, Zeile 52 - Spalte 5, Zeile 56 * * Spalte 8, Zeile 52 - Spalte 9, Zeile 2 * ----- | 1,7 | |
| | | | RECHERCHIERTE SACHGEBIETE (IPC) |
| | | | C08F C07F |

Der vorliegende Recherchenbericht wurde für alle Patentansprüche erstellt

| Recherchenort | Abschlußdatum der Recherche | Prüfer |
|---|---|---|
| München | 16. Oktober 2012 | Richter, Herbert |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

Nummer der Anmeldung

EP 12 18 5359

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt
European Patent Office
Office européen des brevets

**MANGELNDE EINHEITLICHKEIT DER ERFINDUNG ERGÄNZUNGSBLATT B**

Nummer der Anmeldung

EP 12 18 5359

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-6, 8-11(vollständig); 14-17(teilweise)

Initiatoren der allgemeinen Formel (I), diese enthaltende Zubereitungen, Epoxidharze, Verfahren zur Aushärtung, gehärtetes Produkt

---

2. Ansprüche: 7(vollständig); 12-17(teilweise)

Initiatoren ausgewählt aus
{[Ag(1,5-Hexadien)1-4]SbF6)1-oo],
{[Ag(1,7-Octadien)1.5]SbF6)oo,
{[Ag(1,7-Octadien)1.5]SbF6}1000,
{[Ag(1,7-Octadien)1.5]SbF6}500,
{[Ag(1,9-Decadien)1-4]SbF6}1-oo,
{[Ag(Sorbinsäureethylester)1-4]SbF6}1-oo,
[Ag(1,3-Cyclohexadien)1-4]SbF6}1-oo],
{[Ag(1,3-Cyclooctadien)1-4]SbF6}1-oo,
{[Ag(Norbornadien)1-4]SbF6}1-oo,
{[Ag(Dicyclopentadien)1-4]SbF6}1-oo,
{[Ag(Cycloheptatrien)1-4]SbF6}1-oo,
{[Cu(1,7-Octadien)1-4]SbF6}1-oo,
{[Ag(trans,trans,cis-1,5,9-Cyclododecatrien)1-4]SbF6}1-oo,
{[Ag(trans,trans,trans-1,5,9-Cyclododecatrien),-4]
SbF6}1-oo],
{[Ag(Cyclooctatetraen)1-4]SbF6}1-[infinity],
{[Ag(Squalen)1-4]SbF6}1-oo],diese enthaltende Zubereitungen, Epoxidharze, Verfahren zur Aushärtung, gehärtetes Produkt

---

**ANHANG ZUM EUROPÄISCHEN RECHERCHENBERICHT ÜBER DIE EUROPÄISCHE PATENTANMELDUNG NR.** EP 12 18 5359

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2012

| Im Recherchenbericht angeführtes Patentdokument | Datum der Veröffentlichung | Mitglied(er) der Patentfamilie | Datum der Veröffentlichung |
|---|---|---|---|
| US 5089536 A | 18-02-1992 | AU 563548 B2 | 16-07-1987 |
| | | AU 2155283 A | 31-05-1984 |
| | | CA 1308733 C | 13-10-1992 |
| | | DE 3382711 D1 | 07-10-1993 |
| | | DE 3382711 T2 | 10-03-1994 |
| | | DE 3382815 D1 | 31-07-1997 |
| | | DE 3382815 T2 | 02-01-1998 |
| | | EP 0109851 A2 | 30-05-1984 |
| | | EP 0542716 A1 | 19-05-1993 |
| | | HK 1008027 A1 | 30-04-1999 |
| | | HK 1008032 A1 | 30-04-1999 |
| | | JP 1849169 C | 07-06-1994 |
| | | JP 5059921 B | 01-09-1993 |
| | | JP 59108003 A | 22-06-1984 |
| | | US 5089536 A | 18-02-1992 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5726216 A
- EP 0843685 B1


### In der Beschreibung aufgeführte Nicht-Patentliteratur


- Ullmanns Enzyklopädie der technischen Chemie. vol. 12, 525-555
- **H.W. QINN ; R.L. VAN GILDER.** *Can. J. Chem.,* 1970, vol. 48, 2435
- **A. ALBINATI ; S.V. MEILLE ; G. CARTURAN.** *J. Organomet. Chem.,* 1979, vol. 182, 269
- **H. MASUDA ; M. MUNAKATA ; S. KITAGAWA.** *J. Organomet. Chem.,* 1990, vol. 391, 131
- **A.J. CANTY ; R. COLTON.** *Inorg. Chim. Acta,* 1994, vol. 220, 99